(19) Europäisches Patentamt
European Patent Office
Office européen des brevets

(11) Veröffentlichungsnummer: **0 037 382**
**B1**

(12) **EUROPÄISCHE PATENTSCHRIFT**

(45) Veröffentlichungstag der Patentschrift: **21.11.84**

(51) Int. Cl.³: **C 09 B 67/06,** C 09 B 67/24, C 09 B 67/32, C 09 B 67/54

(21) Anmeldenummer: **81810125.5**

(22) Anmeldetag: **26.03.81**

(54) **Farbstoffgranulate und Verfahren zu deren Herstellung.**

(30) Priorität: **01.04.80 CH 2565/80**

(43) Veröffentlichungstag der Anmeldung: **07.10.81 Patentblatt 81/40**

(45) Bekanntmachung des Hinweises auf die Patenterteilung: **21.11.84 Patentblatt 84/47**

(84) Benannte Vertragsstaaten: **CH DE FR GB LI**

(56) Entgegenhaltungen: **FR - A - 2 124 359**

(73) Patentinhaber: **CIBA-GEIGY AG, Postfach, CH-4002 Basel (CH)**

(72) Erfinder: **Bruttel, Beat, Dr., Ob den Reben 5, CH-4461 Böckten (CH)**
Erfinder: **Pfenninger, Heinz, Dr., Rebackerweg 30, CH-4411 Lupsingen (CH)**

**EP 0 037 382 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Granulaten wasserlöslicher Farbstoffe sowie, als industrielles Erzeugnis, die gemäß dem Verfahren erhaltenen Granulate.

Fast alle Farbstoffe haben im pulvrigen Zustand die unangenehme Eigenschaft, daß sie zur Staubbildung neigen. Außerdem ist bei vielen pulverförmigen wasserlöslichen Farbstoffen die Benetzbarkeit mit Wasser so schlecht, daß die Lösegeschwindigkeit in Wasser sehr niedrig ist. Man hat deshalb einerseits versucht, diese Schwierigkeiten mit flüssigen Formulierungen zu umgehen; diese Flüssigeinstellungen besitzen aber andere Nachteile, z. B. verminderte Stabilität bei Temperaturschwankungen, Auskristallisieren und Absetzen der Farbstoffe bei der Lagerung. Andererseits hat man versucht die Farbstoffe in granulierter Form herzustellen. Aber auch hier sind nicht alle Eigenschaften (z. B. mechanische Stabilität wie Abriebfestigkeit, Löslichkeit, vor allem in kaltem Wasser und Schüttgewicht) der granulierten Form zufriedenstellend.

Aus der französischen Patentschrift 2 124 359 ist beispielsweise ein Verfahren zur Herstellung von in erster Linie flüssigen Farbstoffpräparaten bekannt, wonach eine Lösung oder Suspension des Rohfarbstoffs mittels Ultrafiltration entsalzt und aufkonzentriert wird. Gegebenenfalls kann die konzentrierte Lösung bzw. Suspension anschließend bis zur Trockne eingedampft werden. Es finden sich jedoch keine näheren Angaben über die Eigenschaften, der auf diese Weise hergestellten festen Präparate.

Aufgabe der Erfingung war es, eine Handelsform von wasserlöslichen Farbstoffen zu entwickeln, die frei ist von den Nachteilen der bekannten pulvrigen, granulierten oder flüssigen Präparate.

Diese Aufgabe wurde dadurch gelöst, daß man wasserlösliche Farbstoffe zuerst mittels einer Umkehrosmose von Begleitstoffen, die von der Synthese herrühren befreit und alsdann einem Granulierprozeß unterwirft.

Das erfindungsgemäße Verfahren besteht somit darin, daß man eine wäßrige Lösung bzw. Suspension, mindestens eines wasserlöslichen Rohfarbstoffes zur Abtrennung von Synthesenebenprodukten mit Molekulargewichten unter 500 und teilweisen Abtrennung von Wasser über eine halbdurchlässige asymmetrische, ionische Gruppen enthaltende Membran führt, deren Poren einen Durchmesser von 1 bis 500 Å aufweisen, und anschließend die erhaltene, aufkonzentrierte wäßrige Zubereitung in einem Granulierapparat trocknet, und als weitere Zusatzmittel vor und/oder nach dem Durchgang durch die Membran oberflächenaktive Substanzen, Bindemittel, Entstäubungsmittel, Löslichkeitsverbesserer und/oder Coupagemittel zugibt, wobei diese nur dann vorher zugegeben werden, wenn sie nicht durch die Membran abgetrennt werden.

Die oberflächenaktiven Substanzen (Tenside) können einzeln oder im Gemisch eingesetzt werden. Sie werden im allgemeinen in Mengen von 1 bis 30 Gewichtsprozent, bezogen auf das Farbstoff-Präparat, verwendet. Vorteilhaft hat sich eine Mischung aus anionischen und nicht-ionogenen Tensiden erwiesen, wie z. B. 1 bis 20% eines anionischen Tensides und 1 bis 15% eines nicht-ionogenen Tensides.

Neben diesen oberflächenaktiven Substanzen werden als weitere Zusätze in Gesamtmengen von 1 bis 45 Gewichtsprozent, bezogen auf das Farbstoff-Präparat, Bindemittel, Entstäubungsmittel, Löslichkeitsverbesserer und/oder Coupagemittel, wie anorganische oder organische Salze, verwendet.

Gegenstand der Erfindung sind ferner die nach dem erfindungsgemäßen Verfahren erhaltenen Farbstoffpräparate.

Als erfindungsgemäß verwendbare oberflächenaktive Substanzen kommen beispielsweise in Frage: Netz- oder Dispergiermittel anionischer, kationischer oder nichtionogener Natur, wie Ligninsulfonat, Dinaphthylmethandisulfonsäure, Natrium-dioctyl-sulfosuccinat, Dibutylnaphthalinsulfonat, Dodecylbenzolsulfonat, Laurylpyridiniumchlorid, Alkylphenolpolyglykoläther, Stearyl-diphenyl-oxäthyldiäthylentriamin und Äthylenoxid-Addukte.

Bevorzugt sind anionische oberflächenaktive Substanzen (Tenside) wie Kondensationsprodukte aromatischer Sulfonsäuren mit Formaldehyd z. B. Kondensationsprodukte aus Formaldehyd, Naphthalinsulfonsäure und Benzolsulfonsäure, oder aus Rohkresol, Formaldehyd und Naphthalinsulfonsäure, sowie vor allem Kondensationsprodukte aus Phenol-, Kresol- oder Naphthol-sulfonsäure und Formaldehyd, und insbesondere Kondensationsprodukte aus Naphthalinsulfonsäure und Formaldehyd, wie z. B. das Natriumsalz des Kondensationsproduktes von Naphthalin-sulfonsäure mit Formaldehyd der Formel

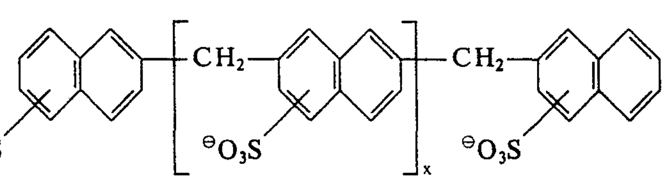

x = 0 bis 7

oder Ligninsulfonate (Sulfit-Celluloseablauge) und Oxyligninsulfonate; ferner Polymerisationsprodukte von ungesättigten Säuren wie das Polymerisationsprodukt der Acrylsäure bzw. Methacrylsäure der Formel

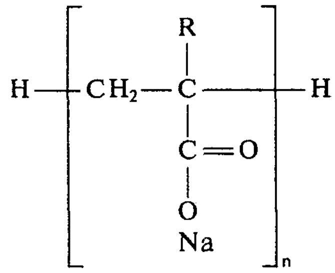

R = H oder $CH_3$
n = ca. 10 bis 100

Als nichtionogene Tenside kommen vor allem in Betracht:
Polyäthylenglykole mit einem Molekulargewicht von vorzugsweise 200 bis 1000;
Mischpolymerisate aus Äthylenoxid und Propylenoxid (sog. Blockpolymerisate);
Symmetrische Acetylene, z. B. die tertiäre Acetylenglykol-Verbindung der Formel

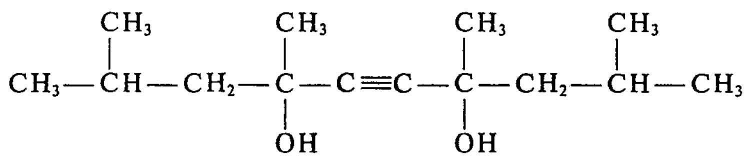

Umsetzungsprodukte aus Fettsäuren mit 8 bis 22 Kohlenstoffatomen und Aminen oder Hydroxyalkylaminen, wie z. B. Cocosfettsäureamid, Ölsäurediäthanolamid oder Cocosfettsäureäthanolamid.

Besonders vorteilhaft haben sich Anlagerungsprodukte erwiesen, aus z. B. 5 bis 200 Mol, vorzugsweise 20 bis 100 Mol Alkylenoxiden, insbesondere von Äthylenoxid, wobei einzelne Äthylenoxideinheiten durch substituierte Epoxide, wie Styroloxid und/oder Propylenoxid, ersetzt sein können, angelagert an höhere Fettsäuren, vorzugsweise mit 8 bis 22 Kohlenstoffatomen, beispielsweise Anlagerungsprodukte aus Fettsäuren (z. B. Ölsäure oder Ricinolsäure) und 10 bis 30 Mol Äthylenoxid, vorzugsweise ein Anlagerungsprodukt aus Ölsäure und 20 Mol Äthylenoxid, oder ein Ricinolsäureester mit 15 Mol Äthylenoxid, oder Anlagerungsprodukten der Alkylenoxide an gesättigte oder ungesättigte Alkohole, Mercaptane oder Amine mit 8 bis 20 Kohlenstoffatomen oder an Alkylphenole oder Alkylthiophenole, deren Alkylrest mindestens 7 Kohlenstoffatome aufweisen, beispielsweise Fettalkoholpolyglykoläther, besonders solche aus einem 8 bis 22 Kohlenstoffatome aufweisenden aliphatischen Kohlenwasserstoffrest veräthert mit 5 bis 200 Mol, vorzugsweise mit 20 bis 100 Mol Äthylenoxid, wie Cetylalkohol veräthert mit 25 Mol Äthylenoxid, Stearylalkohol veräthert mit 25 bis 80 Mol Äthylenoxid und Oleylalkohol veräthert mit 20 bis 80 Mol Äthylenoxid; sowie Hydroabietylalkohol veräthert mit 25 bis 100 Mol Äthylenoxid, oder p-Nonylphenol veräthert mit 9 Mol Äthylenoxid.

Die aliphatischen Kohlenwasserstoffreste der Fettalkoholpolyglykoläther leiten sich von höheren Alkoholen mit 8 bis 22 Kohlenstoffatomen ab, wie z. B. Decyl-, Lauryl-, Tridecyl-, Myristyl-, Cetyl-, Stearyl-, Oleyl-, Arachidyl- oder Behenylalkohol.

Geeignete höhere Fettsäuren mit 8 bis 22 Kohlenstoffatomen sind z. B. Capryl-, Caprin-, Laurin-, Myristin-, Palmitin-, Stearin-, Arachin-, Behen-, Kokosfett-($C_8-C_{18}$), Decen-, Dodecen-, Tetradecen-, Hexadecen-, Olein-, Linol-, Linolen-, Ricinolein-, Eikosen-, Dokosen- oder Clupanodonsäure.

Als Beispiele geeigneter erfindungsgemäß verwendbarer Bindemittel sind genannt:
Saccharose, Alginate, Gelatine, Glycerin, Glykole, Carboxymethylcellulose, Polyvinylpyrrolidone, Polyvinylalkohole sowie Stärke und Stärkeabbauprodukte, die mindestens fünf Hydroxygruppen pro Molekül enthalten, wie Sorbit, Hydratdextrose, Glukose, Milchzucker, Mannit, Mannose oder vorzugsweise Dextrin. Sie werden vorzugsweise in Mengen vin 1 bis 40 Gewichtsprozent, bezogen auf das Präparat, verwendet.

Als Entstäubungsmittel kommen die üblichen in Frage wie homogene Mischungen von Mineralölen und Emulgatoren mit unbegrenzter Emulgierfähigkeit mit Wasser z. B. Paraffinöl und Mineralöle, gegebenenfalls emulgiert mit geeigneten Emulgatoren z. B. Fettsäure(-alkohol)-Äthylenoxidaddukten, insbesondere ein Gemisch aus Mineralöl bzw. Mineralölsulfonsäure und einem Emulgator oder aus Paraffinöl und einem nichtionischen Emulgator. Man verwendet vorzugsweise 1 bis 10 Gewichtsprozent Entstäubungsmittel, bezogen auf das Präparat.

Als erfindungsgemäß verwendbare Löslichkeitsverbesserer sind Harnstoff, Tetramethylharnstoff, Caprolactam, sowie Hilfsmittel mit verstärkter Hydrotropiewirkung wie die in der DE-OS 28 02 327 beschriebenen Hilfsmittelmischungen zu nennen. Der Löslichkeitsverbesserer wird vorzugsweise in Mengen von 1 bis 30 Gewichtsprozent, bezogen auf das Präparat, verwendet.

Als anorganische Salze sind z. B. erwähnt: Natriumchlorid, Lithiumchlorid, Natriumcarbonat, Natriumhydrogencarbonat, Mono-, Di- oder Trinatriumphosphat, Dinatriumhydrogenphosphat, Natriumtripolyphosphat, Polyphosphate, Natriumnitrat, Natriumsulfat, Ammoniumsulfat, Kaliumsulfat, Lithiumsulfat, Natriumhydrogensulfat, sowie als organisches Salz Natriumacetat. Bevorzugte Mengen sind 1 bis 40 Gewichtsprozent, bezogen auf das Präparat.

Als wasserlösliche Farbstoffe kommen beispielsweise saure und basische Farbstoffe, wie Metallkomplex-, Chromierungs-, Entwicklungs- und Beizenfarbstoffe sowie vor allem Reaktivfarbstoffe in Frage. Es handelt sich insbesondere um sulfonsäure- bzw. carbonsäuregruppenhaltige metallfreie oder metallhaltige und metallisierbare Mono-, Dis- und Polyazofarbstoffe, Pyrazolon-, Thioxanthon-, Oxazin-, Stilben-, Formazanfarbstoffe, Anthrachinon-, Nitro-, Methin-, Triphenylmethan-, Xanthon-, Naphthazarin-, Styryl-, Azastyryl-, Naphthoperinon-, Chinophthalon- und Phthalocyaninfarbstoffe, sowie vorzugsweise um solche Farbstoffe, die mindestens einen faserreaktiven Rest im Farbstoffmolekül aufweisen.

Bei den vorzugsweise erfindungsgemäß verwendbaren wasserlöslichen anionischen Farbstoffen handelt es sich insbesondere um die Alkalisalze oder Ammoniumsalze der sogenannten sauren Wollfarbstoffe, der Reaktivfarbstoffe oder der substantiven Baumwollfarbstoffe der Azo-, Anthrachinon- und Phthalocyaninreihe. Als Azofarbstoffe kommen z. B. metallhaltige oder metallfreie Mono- und Disazofarbstoffe sowie Formazanfarbstoffe, die eine oder mehrere Sulfonsäuregruppen enthalten, in Betracht. Als Anthrachinonfarbstoffe sind insbesondere 1-Amino-4-arylamino-anthrachinon-2-sulfonsäuren und als Phthalocyaninfarbstoffe besonders sulfierte Kupferphthalocyanine oder Phthalocyaninarylamide zu erwähnen.

Als wasserlösliche Metallkomplexfarbstoffe kommen vorzugsweise sulfonsäure- bzw. carbonsäuregruppenhaltige Metallkomplexfarbstoffe, beispielsweise 1 : 1 oser 1 : 2 Metallkomplexe von Azo- oder Azomethinfarbstoffen oder metallisierte Phthalocyanine, insbesondere Kupfer- und Nickelphthalocyanine, in Betracht. Bei den 1 : 1 oder 1 : 2-Metallkomplexen handelt es sich vorzugsweise um 1 : 1-Nickelkomplexe, 1 : 1-Kobaltkomplexe, 1 : 1-Kupferkomplexe, 1 : 1-Chromkomplexe, 1 : 1-Eisenkomplexe oder um symmetrische oder asymmetrische 1 : 2-Kobaltkomplexe, 1 : 2-Eisenkomplexe oder 1 : 2-Chromkomplexe von insbesondere o-Carboxy-o'-hydroxy, o-Hydroxy-o'-amino- oder o,o'-Dihydroxyazofarbstoffen des Benzol-azo-benzol-, Naphthalin-azo-naphthalin-, Benzol-azo-naphthalin-, Benzol-azo-pyrazolon-, Benzol-azo-pyridon- oder Benzol-azo-acetessigsäureamid-Typs, wobei diese Gruppierungen unsubstituiert oder auch substituiert sein können. Als Substituenten kommen z. B. in Betracht: gegebenenfalls substituierte Sulfonsäureamide oder Sulfone, Halogen oder Nitro.

Die erfindungsgemäß verwendbaren Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-$\beta$- oder -$\gamma$-hydroxyalkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Äthyl, Propyl, Butyl, oder niedere Hydroxyalkylgruppen, wie 2-Hydroxyäthyl, 2-Hydroxypropyl, 3-Hydroxypropyl.

Beim vorliegenden Verfahren verwendet man die sulfonsäuregruppenhaltigen Azofarbstoffe vorteilhaft in Form ihrer Metallsalze, z. B. der Kalium- oder vor allem Natriumsalze.

Als geeignete faserreaktive Gruppen enthalten die Reaktivfarbstoffe z. B. heterocyclische Gruppen oder eine Acylgruppe von einer Carbonsäure, wobei diese Gruppen mindestens ein unter Färbebedingungen abspaltbares Halogenatom aufweisen. Es handelt sich beispielsweise um die folgenden Gruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, Dichlorinoxylinyl-, 2-Chlorbenzthiazolyl-, Chloracetylaminogruppen oder $\alpha,\beta$-Dibrompropionylaminogruppen.

Desweiteren kommen als faserreaktive Gruppen z. B. noch in Frage Halogencyclobutan-, Mono- oder Bis-($\gamma$-Halogen-$\beta$-hydroxypropyl)-aminogruppen, $\beta$-Halogenäthylsulfamidreste, $\beta$-Halogenäthoxygruppen, $\beta$-Halogenäthylmercaptogruppen, $\gamma$-Halogen-$\beta$-hydroxy-propylsulfamidreste oder 2,3-Epoxypropylgruppen.

Bei den wasserlöslichen basischen Farbstoffen handelt es sich um die gebräuchlichen Salze und Metallhalogenid-, beispielsweise Zinkchlorid-, Doppelsalze der bekannten kationischen Farbstoffe, insbesondere der Methin- bzw. Azamethinfarbstoffe, die z. B. einen Indolinium-, Pyrazolium-, Imidazolium-, Triazolium-, Tetrazolium-, Oxadiazolium-, Thiodiazolium-, Oxazolium, Thiazolium-, Pyridinium-, Pyrimidinium-, Pyrazinium-Ring enthalten.

Die genannten Heterocyclen können gegebenenfalls substituiert und/oder mit aromatischen Ringen kondensiert sein. Ferner kommen auch kationische Farbstoffe der Diphenylmethan-, Triphenylmethan-, Oxazin-, Thiazin- und 1,2-Pyran-Reihe in Frage, sowie schließlich auch Farbsalze der Arylazo- und Anthrachinonreihe.

Die Farbstoffe können gegebenenfalls auch in Mischungen miteinander oder gegebenenfalls mit Farbstoffen von einem anderen Typ vorliegen.

Die erfindungsgemäß verwendbaren Farbstoffe sind bekannt und können nach an sich bekannten Methoden hergestellt werden.

Eine bevorzugte Klasse erfindungsgemäß verwendbare faserreaktive Farbstoffe sind die Farbstoffe der Formel I

$$D-Z_n \qquad (I)$$

worin D den Rest eines metallfreien oder metallhaltigen Azo, Anthrachinon- oder Phthalcyaninfarbstoffes, der eine oder mehrere wasserlösliche Gruppen aufweist, Z eine Diazinyl- bzw. Triazinylgruppe, die mindestens ein abspaltbares Halogenatom aufweist und über eine Aminogruppe an D gebunden ist, und n 1 oder 2 bedeuten.

Besonders bevorzugte Farbstoffe dieser Klasse sind Farbstoffe der Formel Ia:

$$D-Z'_n \qquad \text{(Ia)}$$

worin D die unter Formel I angegebene Bedeutung hat, Z' eine Gruppe der Formel

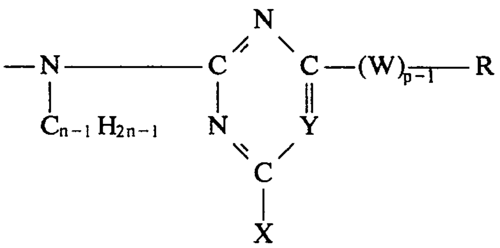

bedeutet, worin

W 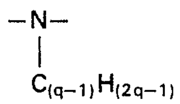

X Halogen, vorzugsweise Cl oder F,
Y =N–, =CH– oder =CX–,
n 1 oder 2, vorzugsweise 1,
p 1 oder 2, und
q 1 bis 3 darstellen,

wobei
wenn p 2 ist, R gegebenenfalls substituiertes Niederalkyl, Phenyl oder Naphthyl ist, und wenn p 1 ist, R Halogen, Niederalkoxy oder Alkoxyalkoxy, gegebenenfalls substituiertes Phenoxy oder $-NH_2$ sein kann.

Eine weitere bevorzugte Klasse von Faserreaktivfarbstoffen sind die Farbstoffe der Formel II

$$D'-Z''_n \qquad \text{(II)}$$

worin D' den Rest eines metallfreien oder metallhaltigen Azo-, Nitro-, Pyrazolon-, Thioxanthon-, Oxazin-, Anthrachinon-, Stilben- oder Phthalocyaninfarbstoffs, der eine oder mehrere wasserlöslichmachende Gruppen aufweist,
Z" eine Acylgruppe von einer Carbonsäure, die mindestens ein abspaltbares Halogenatom aufweist, und n 1 oder 2 bedeuten.

Bevorzugte Farbstoffe dieser Klasse sind Farbstoffe der Formel IIa

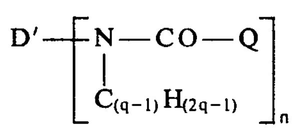
(IIa)

worin D' und n die unter Formel II angegebene Bedeutung haben,

Q 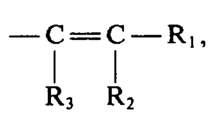 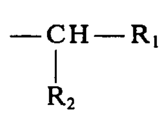 oder 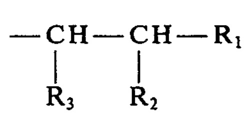

wobei ein oder zwei der Substituenten $R_1$, $R_2$ und $R_3$ Halogen, vorzugsweise Br und Cl, und die anderen Wasserstoff sind, und q die Zahlen 1 bis 3 bedeuten.

Die erfindungsgemäß erhältlichen Präparate enthalten 20 bis 95 Gewichtsprozent, vorzugsweise 65 bis 95 Gewichtsprozent mindestens eines wasserlöslichen Farbstoffes und gegebenenfalls 1 bis 30 Gewichtsprozent einer oberflächenaktiven Substanz und/oder 1 bis 45 Gewichtsprozent weitere Zusätze sowie Restfeuchte, wobei die Präparate vorzugsweise total 3 bis 50 Gewichtsprozent der oberflächenaktiven Substanz und der weiteren Zusätze enthalten.

Erfindungsgemäß verwendbare, halbdurchlässige Membranen sollen makromolekulare Stoffe zurückhalten, während sie einen hohen Durchfluß von Wasser und aufgelösten Stoffen mit einem

niedrigen Molekulargewicht, z. B. Salzen, wie Natriumchlorid, Kaliumchlorid, Ammoniumsulfat, Natriumphosphat, Kaliumsulfat, Natriumacetat oder niedrigmolekularen Verunreinigungen, z. B. nicht umgesetzte oder teilweise zersetzte Ausgangsprodukte, gewährleisten. Sie sollen aber auch verschieden geladene Moleküle trennen können. Diese sogenannte Membran-Hyperfiltration wird auch Umkehr-Osmose (Reverse Osmosis) genannt und ist mit der Ultrafiltration verwandt. Unter diesem Begriff werden Abtrennungsvorgänge im molekularen Bereich verstanden.

Geeignete erfindungsgemäß verwendbare Membranen sind halbdurchlässige, geladene, asymmetrische Membranen, deren Poren einen Durchmesser von 1 bis 500 Å aufweisen. Sie bestehen vorteilhaft aus organischem Material, das ionische Gruppen enthält. Diese Membranen weisen einen »cut off level« von 300 bis 500 Molekulargewicht auf. Für das Verfahren gemäß vorliegender Erfindung sind Membranen mit einem »cut off level« von 400 bis 500 Molekulargewicht besonders geeignet. Sie lassen Wasser, gegebenenfalls vermischt mit organischen Lösungsmitteln und aufgelöste Stoffe, die auf Grund ihrer Molekülgröße unterhalb des Abtrenn-Niveaus (»cut off level«) liegen, mit hohen Geschwindigkeiten pro Flächeneinheit und bei geringem bis mittlerem Druck durchtreten. Erfindungsgemäß werden Drucke von 10 bis 100 bar und vorzugsweise von 10 bis 30 bar verwendet. Der Druck kann z. B. mittels einer Pumpe ausgeübt werden.

In einem Filtrationsgang kann der Aussalzeffekt ohne Farbverluste bis zu 70 und mehr Prozent betragen. Dabei nimmt das Volumen der Lösung der zurückgehaltenen Substanzen (konzentratseitig) entsprechend ab und die Konzentration des zurückgehaltenen Teils zu. Wird eine weitere Verminderung der niedermolekularen Komponente gewünscht, so kann dies ohne Schwierigkeiten nach Verdünnung der zurückgehaltenen Lösung oder Suspension mit Wasser zweckmäßig auf das Ausgangsvolumen durch ein- oder mehrmalige Wiederholung des Verfahrens erreicht werden. Die Trennung kann auch kontinuierlich durchgeführt werden, indem die Zufuhrgeschwindigkeit des Wassers derjenigen der Permeatabnahme angepaßt wird. Diskontinuierlich und kontinuierlich können auf diese einfache Art und Weise bei Zimmertemperatur Aussalz- und Reinigungseffekte von bis zu 95% oder gewünschtenfalls gar bis 99%, und mehr, d. H. bis das Permeat frei von unerwünschten Stoffen ist, erreicht werden.

Die erfindungsgemäß verwendbaren Membranen bestehen im wesentlichen aus einem polymeren Stoff, der mindestens an der Oberfläche durch Reste mit ionisierbaren Gruppen modifiziert ist.

Es können in dieser Weise modifizierte natürliche, halbsynthetische oder synthetische Materialien zu Membranen verarbeitet werden. Ein derart zu modifizierender polymerer Stoff enthält als reaktionsfähige Gruppen beispielsweise Hydroxyl und/oder Aminogruppen. Er kann dann mit passenden Reagentien umgesetzt werden, die einerseits eine ionisierbare Gruppe und andererseits eine unter Bildung einer covalenten Bindung reaktionsfähige Gruppierung, enthalten.

Beispielsweise können folgende polymere Verbindungen in der angegeben Weise modifiziert werden:

- Polymerelektrolyte,
- Celluloseäther oder -ester wie Cellulosenitrat oder -propionat,
- vorzugsweise Celluloseacetate, z. B. solche mit niedrigem Acetylgruppengehalt aber auch höher acylierte Cellulose, z. B. sog. Zweieinhalbacetat, oder
- Polyacrylnitril und Copolymere aus Acrylnitril und andere äthylenisch ungesättigten Monomeren.

Als Reagenzien, die eine ionisierbare Gruppe und den ein Brückenglied zwischen dieser und dem Ausgangspolymer bildenden Rest enthalten, kommen farblose und farbige Verbindungen in Betracht, z. B. ionogene Reaktivfarbstoffe, die verschiedenen Klassen angehören können, wie Anthrachinon-, Azo- oder Formazanfarbstoffe. Als Reaktivgruppen, welche die Bindung dieser Reagenzien an die Ausgangspolymeren ermöglichen, seien die folgenden genannt:

- Carbonsäurehalogenidgruppen,
- Sulfonsäurehalogenidgruppen,
- Reste $\alpha,\beta$-ungesättigter Carbonsäuren, z. B. der Acrylsäure, Methacrylsäure, $\alpha$-Chloracrylsäure, $\alpha$-Bromacrylsäure,
- Reste vorzugsweise niedriger Halogenalkylcarbonsäuren, z. B. der Chloressigsäure, $\alpha,\beta$-Dichlorpropionsäure, $\alpha,\beta$-Dibrompropionsäure,
- Reste von Fluorcyclobutancarbonsäuren, z. B. der Tri- oder Tetrafluorcyclobutancarbonsäure,
- Reste mit Vinylacylgruppen, z. B. Vinylsulfongruppen oder Carboxyvinylgruppen,
- halogenierte Pyrimidin- oder 1,3,5-Triazinreste.

Als ionisierbare Gruppen können die membranbildenden poylmeren Stoffe z. B. Sulfatogruppen, Sulfonsäuregruppen, Sulfonsäureamidgruppen, Carbonsäuregruppen, Carbonsäureamidgruppen, Hydroxyl-, Thiol-, Isocyanat- und/oder Thioisocyanatgruppen, von primären, sekundären oder tertiären Aminogruppen und Wasserstoff gebildete Ammoniumgruppen oder quaternäre Ammoniumgruppen, ferner Phosphonium- oder Sulfoniumgruppen enthalten. Besonders günstige Ergebnisse werden in manchen Fällen mit sulfonsäuregruppenhaltigen Stoffen erzielt. Besonders wertvoll und vielseitig

anwendbar sind die Membranen, deren polymere Materialien aus einem durch einen sulfonsäuregruppenhaltigen Azofarbstoff modifizierten Polymer, bestehen. Der Azofarbstoff kann auch komplex gebundenes Metall, beispielsweise Kupfer, enthalten.

Bevorzugt werden halbdurchlässige Membranen aus Celluloseacetat oder aus Polyacrylnitril und Copolymeren aus Acrylnitril und anderen äthylenisch ungesättigten Monomeren. Diese Membranen bestehen z.B. aus einem Celluloseacetat-Grundgerüst, das durch Umsetzung von nur teilweise acetyliertem Celluloseacetat mit einem polyfunktionellen Polymer modifiziert wurde, welches ionische Gruppen enthält und über ein Brückenglied mit dem Celluloseacetat-Grundgerüst verbunden ist.

Es können aber auch Membranen verwendet werden, die aus einem Grundgerüst bestehen, das Polyacrylnitril oder Polymerisat aus Acrylnitril und anderen äthylenisch ungesättigten Monomeren enthält, welches durch Umsetzung mit Hydroxylamin und anschließend mit einer polyfunktionellen Verbindung modifiziert wurde, welche ionische Gruppen enthält und gegebenenfalls über ein Brückenglied mit dem Grundgerüst verbunden ist.

Der Anteil der Acrylnitrileinheiten im Grundgerüst der Membran beträgt vorteilhaft mindestens 5 und vorzugsweise mindestens 20 Gewichtsprozent.

Bevorzugt sind Copolymere von Acrylnitril und Vinylacetat, Vinyläthern, Vinylpyridin, Vinylchlorid, Styrol, Butadien, (Meth)-acrylsäure, Maleinsäureanhydrid, 2-Amminomethylmethacrylat oder Allylverbindungen oder Ter- oder Tetrapolymeren auf Acrylnitrilbasis.

Das Brückenglied der Membran ist vorteilhaft von einer organischen Verbindung abgeleitet, die mindestens 2 funktionelle Gruppen aufweist.

Das polyfunktionelle Polymer der Membran weist vor allem aliphatische oder aromatische Aminogruppen, Hydroxyl-, Thiol-, Isocyanat- und/oder Thioisocyanatgruppen auf. Vorzugsweise leitet sich das polyfunktionelle Polymer von Polyethylenimin, Polyvinylalkohol, Cellulosederivaten oder Polyvinylanilin ab.

Die Membran enthält als ionische Gruppe vorzugsweise Sulfonsäure-, Carbonsäure- oder Ammoniumgruppen.

Besonders vorteilhaft sind die Membranen, die Reste eines Reaktivfarbstoffes als Reste mit ionogenen Gruppen enthalten.

Diese Membranen können beispielsweise hergestellt werden, indem man auf die Substanz einer Membran, die zur Bildung covalenter Bindungen befähigte Gruppen aufweist, eine Verbindung einwirken läßt, die mindestens eine ionogene Gruppe und mindestens eine Reaktivgruppe enthält, welche mit den reaktionsfähigen Gruppen der Membransubstanz zur Bildung kovalenter Bindungen befähigt ist, und dann die so modifizierte Membran einer Wärmebehandlung unterwirft (»Tempern«). Durch die Wärmebehandlung wird weitgehend die Porengröße der Membranhaut bestimmt. Man behandelt beispielsweise die Membran während 1 bis 30 Minuten bei einer Temperatur von 60 bis 90°C, zweckmäßig indem man sie in warmes Wasser taucht. Gegebenenfalls kann die Wärmebehandlung auch vor der Umsetzung mit der reaktiven, ionisierbare Gruppen enthaltenden Verbindung ausgeführt werden. Ferner läßt sich die Umsetzung auch ausführen, bevor das polymere Material zur asymmetrischen Membran verarbeitet wird.

Die Membranen können verschiedene Formen aufweisen, z.B. plattenförmig, blattförmig, röhrenförmig, in Form einer Tasche, eines Konus oder von Hohlfasern vorliegen. Bei starker Druckbelastung können die Membranen natürlich durch Drahtsiebe oder Lochplatten gestützt werden. Innerhalb des weiter oben angegebenen Bereiches kann die Porengröße durch verschiedenes Tempern variiert und ebenfalls dem jeweiligen Verwendungszweck angepaßt werden. Zweckmäßig beträgt die durchschnittliche Ladungsdichte (gleich Gehalt an ionisierbaren Gruppen) der Membran 1 bis 100 Milliäquivalente je kg trockene Membran.

Das erfindungsgemäße Verfahren wird beispielsweise folgendermaßen durchgeführt.

Als Ausgangslösung bzw. -suspension zur Bereitung der flüssigen Farbstoffzubereitung zur Herstellung der erfindungsgemäßen Granulate wird zweckmäßig eine Anschlämmung der feuchten Preß- oder Filterkuchen der Rohfarbstoffe von unterschiedlichem Gehalt an unerwünschten gelösten Stoffen mit niedrigem Molekulargewicht, besonders von bei der Synthese des Farbstoffes anfallenden Nebenprodukten und gelösten anorganischen Salzen in Wasser verwendet. In Fällen, da z.B. das Kupplungs- bzw. Kondensationsprodukt nicht oder nur äußerst mühsam aussalzbar ist, kann auch direkt die rohe Kupplungs-, Kondensations- bzw. Neutralisationslösung verwendet werden. Vorteilhaft verwendet man Ausgangslösungen bzw. -suspensionen, die 2 bis 50% Farbstoff enthalten.

Bei manchen Farbstoffen, vor allem Metallkomplexfarbstoffen ist es vorteilhaft, den aus der Syntheselösung bzw. als Preßkuchen erhaltenen Rohfarbstoff nach bekannten Methoden, z.B. in einer Sand-oder Mikrosolmühle naß zu mahlen.

Man kann die Synthesemischung auch mit weiteren, für die Herstellung der Granulate erwünschten Zusätzen und/oder oberflächenaktiven Substanzen versetzen. Auf diese Weise werden die Zusätze, und vor allem die oberflächenaktiven Substanzen, in einem Arbeitsgang ebenfalls entsalzt und konzentriert. Das Gemisch wird zur Abtrennung von Synthesenebenprodukten mit Molekulargewichten, die unterhalb des »cut off level« der verwendeten Membran liegen, über eine halbdurchlässige Membran geführt. Gleichzeitig wird auf einen Gehalt an Farbstoff von 10 und vorteilhaft 20 bis 50% konzentriert. Die so erhaltenen aufkonzentrierten, entsalzten Lösungen von wasserlöslichen Farbstoffen werden

anschließend in einem Granulierapparat getrocknet, gegebenenfalls durch Zugabe weiterer Zusatzmittel und nachfolgendem Rühren zur Erzielung einer homogenen Suspension.

Es kommen die verschiedensten Granulierapparate in Frage, die sich zum Granulieren einer Festsubstanz aus einer flüssigen Zubereitung derselben eignen, beispielsweise ein Düsenzerstäuber, Scheibenzerstäuber, Mahltrockner z. B. vom Typ »Mikrontrockner«, oder eine Wirbelschicht-Anlage. Die Trocknung kann absatzweise oder kontinuierlich durchgeführt werden.

Die erfindungsgemäßen Granulate werden vorteilhaft kontinuierlich in einer Wirbelschicht-Anlage, wie sie beispielsweise aus der DE-OS 2 231 445 bekannt ist, hergestellt, indem man in ein Wirbelbett kontinuierlich oder absatzweise die definitionsgemäße, aufkonzentrierte, entsalzte Zubereitung in Form einer Lösung, Suspension oder eines Gemisches einer Lösung und Suspension, enthaltend den Farbstoff zusammen mit den genannten Zusätzen, einsprüht, unter Aufrechterhaltung des Wirbelbettes aus diesem kontinuierlich oder absatzweise körniges Material entnimmt. Das so entnommene Material wird dann vorzugsweise gesichtet, indem die Grobanteile mit einem Durchmesser größer als 5 mm, gegebenenfalls nach Zerkleinerung sowie die Feinanteile mit einem Durchmesser kleiner als 0,1 mm wieder in die wäßrige Zubereitung und/oder in das Wirbelbett kontinuierlich oder absatzweise zurückgeführt werden. Die Teilchen mit der Größe zwischen 0,1 und 5 mm stellen den bevorzugten Anteil der erfindungsgemäßen Präparate dar und sind zur Verwendung als Farbstoffpräparate besonders geeignet. Man kann die entsalzte, aufkonzentrierte Synthese-Lösung bzw. -Suspension mit den Zusätzen mischen und homogenisieren und anschließend in das Wirbelbett sprühen. Gleichzeitig kann man mit der wäßrigen Farbstoffzubereitung weitere pulverförmige Zusätze in das Wirbelbett sprühen.

In einer bevorzugten Ausführungsform wird die aus der Umkehr-Osmose erhaltene wäßrige Suspension bzw. Lösung, enthaltend mindestens einen Farbstoff, Wasser und die definitionsgemäßen Zusätze und/oder oberflächenaktive Substanzen auf ein Wirbelbett, bestehend aus dem Endprodukt (Granulat) aufgedüst. Der Prozeß kann gleichermaßen ablaufen durch kontinuierliche Zuführung der besagten Suspension bzw. Lösung oder der trockenen Pulverform unter Zudüsung von Wasser enthaltend die Zusätze und/oder oberflächenaktive Substanzen. Das entstehende Granulat wird aus dem Wirbelbett unter anschließender Trennung von Grob- und Feinanteil, kontinuierlich abgezogen, wobei der Feinanteil und der Grobanteil, gegebenenfalls nach Zerkleinerung in die Suspension bzw. vorzugsweise in das Wirbelbett zurückgeführt wird.

Das Wirbelbett wird durch einen Gasstrom erzeugt, der vorzugsweise eine Eingangstemperatur von 35 bis 300°C aufweist, wobei die Temperatur im Wirbelbett vorteilhaft 50 bis 100°C beträgt.

Die Wirbelbett-Druckdifferenz ($\Delta p$) beträgt dabei vorzugsweise 490,3 bis 1471 Pa (50 bis 1500 mm Wassersäule (WS)) und die Strömungsgeschwindigkeit 0,5 bis 3 m/sec.

Die Wirbelbett-Temperaturdifferenz ($\Delta T$) liegt normalerweise im Bereich von 5 bis 15°C. Die Leistung kann je nach Apparatur und Produkt entsprechend angepaßt werden. Vorteilhaft wird eine Apparatur mit 2,5 $m^2$ Siebbodenfläche verwendet, die mit einer Leistung von 100 bis 900 Liter pro Stunde flüssigen Zubereitung gefahren wird.

Das erfindungsgemäße Verfahren ermöglicht die Herstellung von Präparaten mit hohem Farbstoffgehalt. Man erhält nach diesem Verfahren staubarme bis staubfreie Granulate von einer Korngröße zwischen 50 und 2000 μm, vor allem zwischen 100 und 2000 μm, die sich auszeichnen durch eine einheitliche formstabile Korngröße und relativ hohes Schüttgewicht, durch eine hohe mechanische Festigkeit, durch ihre Rieselfähigkeit und durch ihr gutes Löseverhalten, wie Benetzung und Dispergierbarkeit. Insbesondere bilden sie beim Transport und bei der Verarbeitung keinen Staub. Diese Eigenschaft behalten sie auch beim Lagern über mehrere Monate, z. B. 6 bis 12 Monate, bei einer Temperatur von −10°C bis +50°C. Bei der Verwendung dieser Präparate zur Bereitung wäßriger Färbeflotten erhält man schaumarme bis schaumfreie Flotten mit sehr guter Lösungsstabilität, auch bei Anwesenheit von Elektrolyten.

In den nachfolgenden Beispielen, welche die Erfindung erläutern, bedeuten Teile Gewichtsteile und Prozente Gewichtsprozente. Die Temperaturen sind in Grad Celsius angegeben. WS bedeutet Wassersäule. Die sauren Farbstoffe liegen in der Regel als Alkalisalz, vor allem als Natriumsalz vor. Die Bezeichnung staubarm bei den Präparaten bedeutet, daß praktisch keine Teilchen mit einer Größe unter 50 μm vorhanden sind.

Die einzelnen Tests wurden wie folgt durchgeführt:

## Staubtest

Auf einen Metallzylinder von 500 ccm Inhalt wird ein Metalltrichter mit einem lichten Durchmesser von 10 cm und einem Rohr (lichter Durchmesser 15 mm) gesetzt, dessen unteres Rohrende bis zur 200 ccm-Grenze des Zylinders reicht. Auf der Höhe von 400 ccm des Zylinders wird ein gelochter Papier-Rundfilter (Schleicher und Schüll LS14) befestigt, das mit Wasser derart angefeuchtet ist, daß das Filterpapier nur mäßg feucht, aber nicht triefend naß ist. Dann werden 10 g der zu prüfenden Substanz durch den Trichter rasch eingeschüttet, 3 Minuten gewartet, der Trichter herausgenommen und das Papierrundfilter durch Durchschneiden entfernt. Dieses Filterpapier wird dann durch eine 5-Stufige Bewertungsskala wie folgt bewertet.

Note 1 = stark stäubend, wenn Papierrundfilter stark getönt bis intensiv gefärbt ist;
Note 2 = erheblich stäubend, wenn Papierrundfilter schwach getönt ist;
Note 3 = mäßig stäubend, wenn sich auf dem Papierrundfilter viele Farbflecken, die sich teilweise berühren, befinden;
Note 4 = schwach stäubend, wenn sich auf dem Papierrundfilter Farbstofftupfen, aber keine zusammenhängenden Farbflecke befinden;
Note 5 = staubarm, wenn das Papierrundfilter eine kaum sichtbare Anfärbung oder höchstens vereinzelte Farbstofftupfen aufweist.

## Abriebtest

Prüfung der mechanischen Festigkeit von Farbstoff-Granulaten

40 g des zu prüfenden Farbstoff-Granulates werden bei 25 U/Min., während 200 Minuten (= 5000 Umdrehungen) in einer Plexiglastrommel (Durchmesser 30 cm) mit einer Fallschikane (der Firma ERWEKA GmbH, BRD) rotiert. Der Farbstoffabrieb wird durch den Staubtest bestimmt. Die Bewertung erfolgt durch den Vergleich der Staubteste vor und nach der mechanischen Behandlung.

## Schüttgewicht

Ca. 50—100 g Granulat werden in einem 250-ml-Meßzylinder auf ein Gramm genau eingewogen (G).
Durch zwanzigmaliges leichtes Aufklopfen des Meßzylinders auf einer Gummiunterlage wird die Füllung kompakter gemacht und das so erreichte Volumen in ml abgelesen (V). Das Schüttgewicht wird berechnet:

$$\frac{G\ (\text{in Gramm})}{V\ (\text{in ml})}.$$

Das Schüttgewicht kann auch durch ein Stampfvolumeter der Firma ENGELMANN, Ludwigshafen, nach DIN-Blatt Nr. 53'194 geprüft werden.

## Anschlämmtest

Prüfung des Verhaltens von wasserlöslichen Farbstoffen beim Anteigen (Anschlämmen) mit kaltem Wasser

10 g des zu prüfenden Farbstoff-Granulates werden in einem 100-ml-Becherglas eingewogen. 10 ml entsalztes (bzw. destilliertes) Wasser von 20°C werden zugegeben und mittels eines Glasstabes (Durchmesser 5 mm) während maximal 30 Sekunden angeteigt. Die entstandene Paste wird visuell nach Anspekt, Benetzbarkeit, Klumpenbildung (weich, hart, gummiartig, klebrig) und Schaumbildung beurteilt:

Ideales Verhalten:
gut benetzbar; homogene, weiche oder dünnflüssige Paste.

Zu beanstanden:
harte, gummiartige und/oder klebrige Klumpenbildung.

Zwecks weiterer Beurteilung wird die entstandene Paste anschließend mit 50 ml Wasser langsam weiter verdünnt und das Verhalten beurteilt.

Gutes Verhalten:
gute Verteilung bzw. rascher Abbau der Klumpenbildung.

Zu beanstanden:
schlechte Verteilung bzw. schlechter Abbau der Klumpenbildung.

Benetzbarkeit

Bestimmung der Benetzbarkeit von kaltwasserlöslichen Farbstoffen

3 g des zu prüfenden Farbstoff-Präparates werden ohne zu Rühren in 100 ml entsalztes Wasser von 20°C in einem 200-ml-Becherglas gleichmäßig eingestreut. Dann wird gleich anschließend 10 Sekunden bei 750 U/Min. mit einem Magnetrührer (Magnetstäbchen: Durchmesser 7 mm, Länge 35–40 mm) gerührt. Falls unbenetzter Farbstoff auf der Oberfläche schwimmt, wird nochmals 10 Sekunden weitergerührt. Dieser Vorgang wird so oft wiederholt bis der Farbstoff vollständig benetzt ist.

Beurteilung:

| | |
|---|---|
| bis 10 Sek. | sehr gut |
| 11–20 Sek. | gut |
| 21–30 Sek. | mäßig (genügend) |
| >30 Sek. | ungenügend |

Kaltwasserlöslichkeit

Einstreu-Methode

Eine bestimmte Menge (in g) vom zu prüfenden Farbstoff-Präparat wird in 200 ml entsalztes Wasser bei 20°C in einem 400-ml-Becherglas unter Rühren (Magnetrührer bei 750 U/Min.) gegeben und 2 Minuten gerührt. Dann wird die Farbstoff-Lösung – oder feine Dispersion – durch ein Meraklonfilter (Durchmesser 7 cm) unter Vakuum filtriert und anschließend unter Vakuum entwässert. Die Löslichkeitsgrenze ist überschritten, wenn Filterrückstände auftreten.

Anschlämm-Methode

Die zu prüfende Menge vom Farbstoff-Präparat wird mit der 1–3fachen Menge Wasser in einem 400-ml-Becherglas angeteigt bzw. benetzt. Anschließend wird auf 200 ml mit entsalztem Wasser bei 20°C verdünnt und 1 Minute mit einem Magnetrührer (bei 750 U/Min.) gerührt. Dann wird die Farbstoff-Lösung – oder feine Dispersion – durch einen Meraklonfilter (Durchmesser 7 cm) unter Vakuum filtriert und anschließend unter Vakuum entwässert. Die Löslichkeitsgrenze ist überschritten, wenn Filterrückstände auftreten.

Als Kaltwasserlöslichkeit wird die niedrigere aus den beiden Methoden ermittelte maximal lösliche Farbstoffmenge in g/l bewertet.

Heiswasserlöslichkeit bei 60°C

Die zu prüfende Menge vom Farbstoff-Präparat wird in 200 ml entsalztes Wasser in einem 300-ml-Erlenmeyerkolben durch Aufkochen in Lösung gebracht. Danach läßt man die Lösung durch Stehen an der Luft auf 65°C abkühlen und filtriert durch einen angefeuchteten Papierfilter (SS 1450 CV Durchmesser 7 cm). Anschließend wird mit 50 ml entsalztem Wasser von 60°C nachgespült (unter Vakuum).

Als Heißwasserlöslichkeit wird die höchste Konzentration des Farbstoff-Granulates im Wasser bewertet, die keinen Filterrückstand ergibt.

Elektrolyt-Löslichkeit bei 20°C

Unter Elektrolyt-Löslichkeit versteht man die Lösungsstabilität im Färbebad in Gegenwart von Elektrolyten des Färbeprozesses.

Die zu prüfende Menge vom Farbstoff-Präparat wird in einem 300-ml-Erlenmayerkolben mit 150 ml entsalztem Wasser von ca. 60°C übergossen, 10 Minuten bei 60°C auf einem Wasserbad unter Rühren (mit einem Magnetrührer) gelöst und anschließend auf 20°C abgekühlt. 50 ml einer Lösung (enthaltend 240 g/l Natriumchlorid und 20 g/l Soda kalz.) werden der abgekühlten Prüflösung zugegeben und 30 Minten bei 20°C (Thermostat) stehen gelassen. Die Prüflösung wird durch ein angefeuchtetes Papierfilter (SS 1450 CV Durchmesser 7 cm) filtriert und anschließend mit 50 ml heißem entsalztem Wasser nachgespült (unter Vakuum).

Als Elektrolyt-Löslichkeit wird die höchste Konzentration des Farbstoff-Präparates im Wasser bewertet, die keinen Filterrückstand ergibt.

## Herstellung der Membranen

Die bevorzugten, erfindungsgemäß verwendbaren Membranen können beispielsweise wie folgt hergestellt werden:

Aus 25 g Celluloseacetat (EASTMAN KODAK, Typ 398/10, Acetylierungsgrad = 39,8%), 45 g Aceton und 30 g Formamid wird eine Lösung hergestellt. Man läßt sie drei Tage stehen, gießt sie auf eine Glasplatte und verstreicht sie mit einem Spatel zu einer Schicht von 0,6 mm Dicke, läßt während 5 Sekunden bei 25°C Lösungsmittel verdunsten, legt die Glasplatte für 2 Stunden in Eiswasser ein und zieht die entstandene Membran von der Glasplatte ab.

Die Membran wird dann in eine 5%ige wäßrige Lösung der 1:2-Chromkomplexverbindung des Farbstoffes der Formel

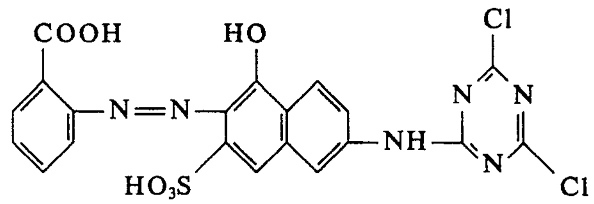

eingetaucht und verbleibt dort während 48 Stunden bei pH-Wert 6 und 25°C. Hierauf wird der pH-Wert der Farbstofflösung durch Zusatz von Natriumhydroxyd auf 10,4 gebracht und die Lösung während 40 Minuten bei 25°C ständig bewegt.

Anstatt die Membran so in zwei Stufen bei der Farbstofflösung zu behandeln, kann man sie auch einstufig während 2½ Stunden beim pH-Wert 10,5 und bei 25°C mit einer 10%igen Lösung des Chromkomplexfarbstoffes behandeln. Zur anschließenden Wärmebehandlung (Tempern) wird die Membran während 10 Minuten in Wasser von 60°C eingelegt.

## Beispiel 1

Der Filterpreßkuchen des Farbstoffs der Formel

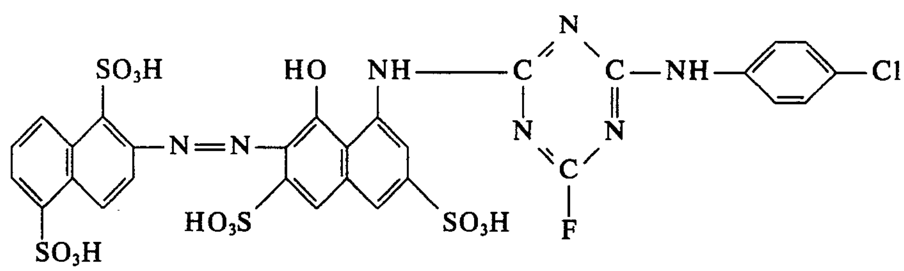

wird in eine wäßrige Lösung von 10% Trockengehalt gebracht und in einer Anlage für Reverse-Osmose à 0,4 $m^2$ Membranfläche (Celluloseacetat-Membran [40% Acetylierungsgrad], modifiziert mit einem sauren halogentriazinhaltigen Reaktiv-Farbstoff gemäß der DE-OS 2 505 254) unter Anwendung von 10–30 bar Überdruck während 10 Stunden entsalzt und aufkonzentriert. Die resultierende dickflüssige Suspension von 22% Trockengehalt wird mit 4% Dinatriumhydrogenphosphat-Lösung, berechnet auf Trockengehalt der Suspension, verrührt und danach mit einer 20%igen Lösung, berechnet auf Trockengehalt der Suspension, von einem Dispergator (Natriumsalz eines Naphthalinsulfosäure-Formaldehyd-Kondensationsproduktes) versetzt. Die auf diese Weise erhaltene Suspension wird über einen Wirbelschichtgranulator zu einem Farbstoffgranulat mit hoher Dichte und guter Abriebfestigkeit getrocknet. Allfällig im Granulatgut verbleibender Staubanteil wird über ein Luftstrahlsieb entfernt.

Man erhält ein Farbstoffgranulat folgender Zusammensetzung:

| | |
|---|---|
| 74,7% | Rohfarbstoff praktisch salzfrei |
| 15,5% | Dispergator |
| 3% | Dinatriumhydrogenphosphat |
| 6,7% | Wasser als Restfeuchte |

| Eigenschaften des fertigen Granulats | | Vergleichs-Granulat (ohne Umkehr-Osmose) |
|---|---|---|
| Abriebfestigkeit | 5 | 4 |
| Staubwert | 4 | 3 |
| Löslichkeit 60 °C | 120 g/l | 80 g/l |
| Elektrolytlöslichkeit | 20 g/l | 12,5 g/l |
| Kaltwasserlöslichkeit | 80 g/l | 50 g/l |
| Anschlämmen | gut | mäßig |
| Benetzen | gut | mäßig |
| Schüttgewicht | 0,6 kg/l | 0,45 kg/l |
| Korngrößenverteilung | | |
| <90 µm | 6% | 15% |
| 90–350 µm | 79% | 80% |
| >350 µm | 15% | 5% |

b) Wenn man im obigen Beispiel anstelle eines Wirbelschichtgranulators einen Düsenzerstäuber, Mahltrockner, Scheibenzerstäuber oder andere Trocknungsapparatur verwendet, so erhält man Farbstoff-Granulate mit ähnlichen Eigenschaften.

## Beispiel 2

a) 1000 ml der aus der Farbstoffsynthese direkt anfallenden Syntheselösung des Farbstoffes der Formel

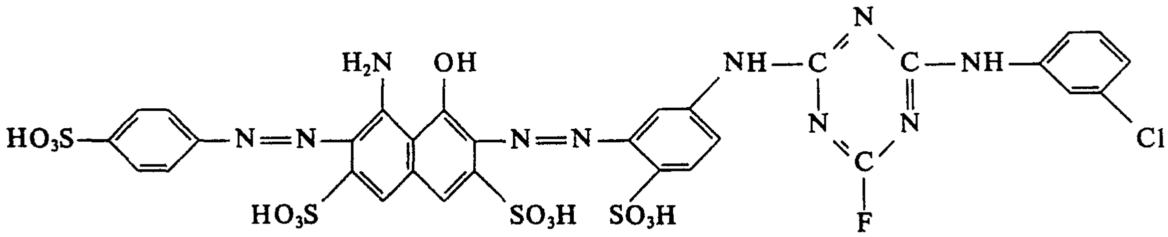

mit einem Trockengehalt von 10% werden in einer Anlage für Reserve-Osmose wie im Beispiel 1 beschrieben entsalzt und auf ein Volumen von 450 ml aufkonzentriert. Die resultierende Suspension wird mit einer Lösung von 5 g Dinatriumhydrogenphosphat in 30 ml Wasser von 50°C versetzt. Zusätzlich werden 40 ml einer 50%igen Lösung eines Dispergators auf Basis Naphthalinsulfosäure-Formaldehyd-Kondensationsprodukt zugegeben. Diese Suspension wird einem Zerstäubungstrockner zugeführt und granuliert.

Es resultiert ein abriebfestes Granulat mit glatter Oberfläche und hohem Schüttgewicht folgender Zusammensetzung:

| | |
|---|---|
| 73% | Rohfarbstoff, praktisch salzfrei |
| 4,8% | Dinatriumhydrogenphosphat |
| 17,2% | Dispergator (Kondensationsprodukt) |
| 5% | Wasser als Restfeuchte |

| Eigenschaften des fertigen Granulats | | Vergleichs-Granulat (ohne Umkehr-Osmose) |
|---|---|---|
| Abriebfestigkeit | 4 | 3 |
| Staubwert | 5 | 4 |
| Löslichkeit 60°C | 100 g/l | 80 g/l |
| Elektrolytlöslichkeit | 40 g/l | 25 g/l |
| Kaltwasserlöslichkeit | 40 g/l | 25 g/l |
| Anschlämmen | gut | mäßig |
| Benetzen | gut | ungenügend |
| Schüttgewicht | 0,6 kg/l | 0,4 kg/l |
| Korngrößenverteilung | | |
| <90 μm | 15% | 20% |
| 90–350 μm | 75% | 75% |
| >350 μm | 10% | 5% |

b) Wenn man im obigen Beispiel anstelle eines Zerstäubungstrockners einen anderen Granulator wie einen Scheibenzerstäuber, Wirbelschichtgranulator oder Mahltrockner verwendet, so erhält man Farbstoffgranulat ähnlicher Eigenschaften.

Beispiel 3

a) 1000 ml der aus der Farbstoffsynthese direkt anfallenden Syntheselösung des Farbstoffes der Formel

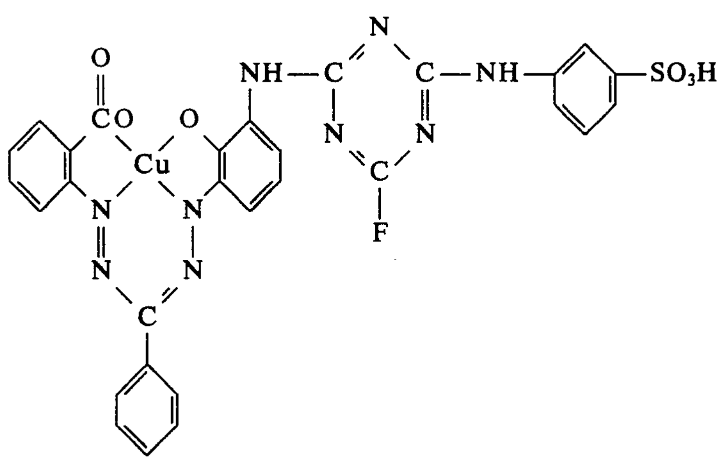

mit einem Trockengehalt von 10% werden in einer Anlage für Reverse-Osmose wie im Beispiel 1 beschrieben entsalzt und auf ein Volumen von 450 ml aufkonzentriert. Die resultierende Suspension wird mit einer Lösung von 4 g Dinatriumhydrogenphosphat in 30 ml Wasser von 50°C versetzt. Zusätzlich werden 32 ml einer 50%igen Lösung eines Dispergators auf Basis Naphthalinsulfonsäure-Formaldehyd-Kondensationsprodukt zugegeben. Diese Suspension wird einem Zerstäubungstrockner zugeführt und granuliert.

Es resultiert ein abriebfestes Granulat mit glatter Oberfläche und hohem Schüttgewicht folgender Zusammensetzung:

| | |
|---|---|
| 75% | Rohfarbstoff, praktisch salzfrei |
| 4% | Dinatriumhydrogenphosphat |
| 15% | Dispergator (Kondensationsprodukt) |
| 6% | Wasser als Restfeuchte |

| Eigenschaften des fertigen Granulats | | Vergleichs-Granulat (ohne Umkehr-Osmose) |
|---|---|---|
| Abriebfestigkeit | 4 | 3 |
| Staubwert | 5 | 3 |
| Löslichkeit 60°C | 100 g/l | 80 g/l |
| Elektrolytlöslichkeit | 40 g/l | 20 g/l |
| Kaltwasserlöslichkeit | 50 g/l | 30 g/l |
| Schüttgewicht | 0,65 kg/l | 0,35 kg/l |
| Korngrößenverteilung | | |
| <90 µm | 12% | 23% |
| 90–350 µm | 70% | 65% |
| >350 µm | 18% | 12% |
| Chemische Stabilität der trockenen Handelsform bei Lagerung während 3 Monaten bei 40°C | stabil | Farbstärkeverlust von 15%, instabil |

## Beispiel 4

a) 1000 ml der aus der Farbstoffsynthese direkt anfallenden Syntheselösung des Farbstoffes der Formel

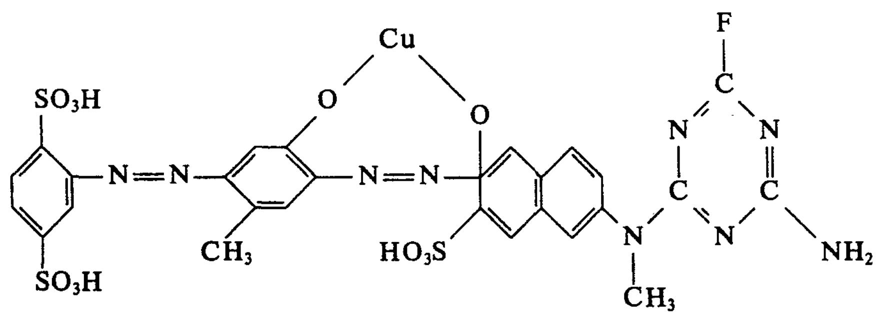

mit einem Trockengehalt von 10% werden in einer Anlage für Reverse-Osmose wie im Beispiel 1 beschrieben entsalzt und auf ein Volumen von 450 ml aufkonzentriert. Die resultierende Suspension wird mit einer Lösung von 5 g Dinatriumhydrogenphosphat und 4 g Natriumtripolyphosphat in 30 ml Wasser von 50°C versetzt. Zusätzlich werden 28 ml einer 50%igen Lösung eines Dispergators auf Basis Naphthalinsulfonsäure-Formaldehyd-Kondensationsprodukt zugegeben. Diese Suspension wird einem Zerstäubungstrockner zugeführt und granuliert.

Es resultiert ein abriebfestes Granulat mit glatter Oberfläche und hohem Schüttgewicht folgender Zusammensetzung:

| | |
|---|---|
| 77% | Rohfarbstoff, praktisch salzfrei |
| 3,8% | Dinatriumhydrogenphosphat |
| 10,8% | Dispergator (Kondensationsprodukt) |
| 3% | Natriumtripolyphosphat |
| 5,4% | Wasser als Restfeuchte |

| Eigenschaften des fertigen Granulats | | Vergleichs-Granulat (ohne Umkehr-Osmose) |
|---|---|---|
| Abriebfestigkeit | 4 | 2 |
| Staubwert | 5 | 3 |
| Löslichkeit 60°C | 100 g/l | 70 g/l |
| Elektrolytlöslichkeit | 30 g/l | 20 g/l |
| Kaltwasserlöslichkeit | 80 g/l | 60 g/l |
| Schüttgewicht | 0,55 kg/l | 0,45 kg/l |
| Korngrößenverteilung | | |
| <90 μm | 12% | 20% |
| 90—350 μm | 80% | 78% |
| >350 μm | 8% | 2% |
| Lagerstabilität, chemische Stabilität des Reaktivfarbstoffs bei 40°C während 3 Monaten gelagert | stabil | Farbstärkeverlust von 25%, instabil |

Beispiel 5

a) 250 g Filterpreßkuchen des Farbstoffes der Formel

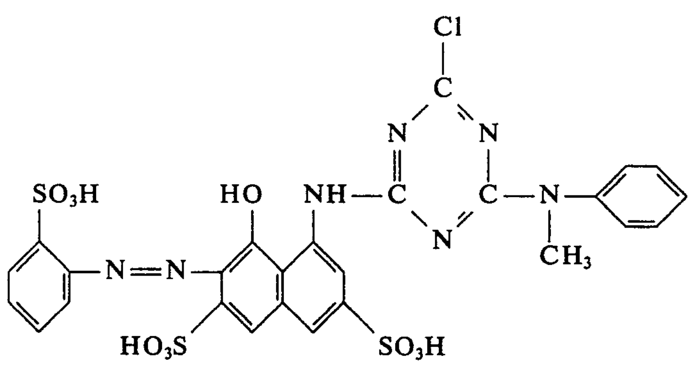

mit einem Trockengehalt von 40% werden in 1000 ml Wasser angerührt zu einer homogenen Suspension und sofort mit 15 g einer 40%igen wäßrigen Lösung eines Umsetzungsprodukts aus Ölsäure mit 20 Mol Äthykenoxid von 50°C versetzt. Es werden noch 20 ml einer 50%igen Lösung von einem Naphthalinsulfosäure-Formaldehyd-Kondensationsprodukt zugegeben.

Anschließend wird diese Lösung in einer Apparatur für Reverse-Osmose unter 10—30 bar Überdruck in Zirkulation während 10 Stunden entsalzt und entwässert bis auf eine Feststoffkonzentration von 25%.

Man kann die so erhaltene aufkonzentrierte, entsalzte Suspension, gegebenenfalls nach Verdünnung mit Wasser und/oder organischem Lösungsmittel auf die gewünschte Farbstärke, gegebenenfalls unter Zusetzung von wasserlöslichem Hilfsmittel, gleich als flüssige Farbstoff-Formulierung verwenden.

Die aus der Reverse-Osmose erhaltene konzentrierte Suspension wird einem Wirbelschichtgranulator zugeführt und granuliert. Es resultiert ein glattes, abriebfestes und staubarmes Granulat von hohem Schüttgewicht folgender Zusammensetzung:

| | |
|---|---|
| 80% | Rohfarbstoff, praktisch salzfrei |
| 6% | Umsetzungsprodukt aus Ölsäure und 20 Mol Äthylenoxid |
| 9% | Naphthalinsulfosäure-Formaldehyd-Kondensationsprodukt |
| 5% | Wasser als Restfeuchte |

| Eigenschaften des fertigen Granulats | | Vergleichs-Granulat (ohne Umkehr-Osmose) |
|---|---|---|
| Staubwert | 4 | 2 |
| Abriebfestigkeit | 4 | 1 |
| Löslichkeit 60°C | 100 g/l | 80 g/l |
| Schüttgewicht | 0,7 kg/l | 0,35 kg/l |
| Korngrößenverteilung | | |
| <90 µm | 6% | 12% |
| 90–350 µm | 72% | 79% |
| >350 µm | 12% | 9% |

b) Wenn man im obigen Beispiel anstelle eines Wirbelschichtgranulators einen anderen Granulator wie einen Düsenzerstäuber, Scheibenzerstäuber oder Mahltrockner verwendet, so erhält man Farbstoffgranulate ähnlicher Eigenschaften.

Beispiele 6 und 7

Wenn man den im Beispiel 5 angegebenen Farbstoff durch einen der folgenden Farbstoffe ersetzt und sonst wie im Beispiel 5 angegeben verfährt, so erhält man Farbstoff-Granulate mit ähnlichen Eigenschaften.

6 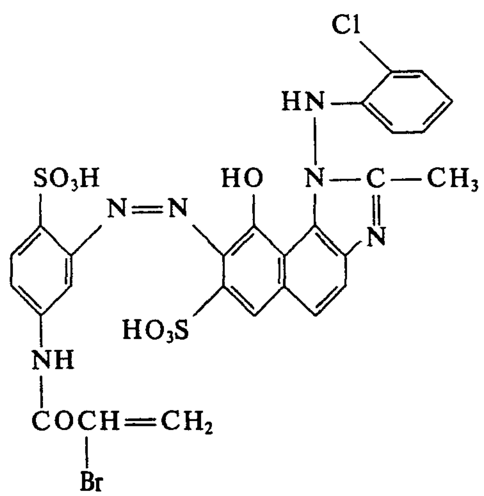

7 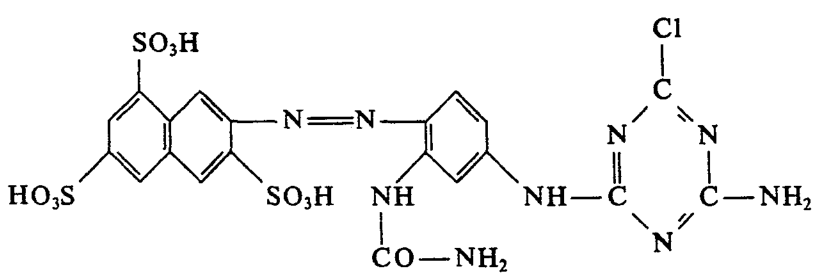

Verwendet man anstelle der in den obigen Beispielen angegebenen Dispergatoren entsprechende Mengen der in folgender Tabelle aufgeführten Hilfsmittel bei im übrigen gleicher Arbeitsweise, so erhält man Farbstoffgranulate mit ähnlichen Eigenschaften.

Tabelle

| Beispiel Nr. | |
|---|---|
| 8 | Oxyligninsulfonat. |
| 9 | Kondensationsprodukt aus Stearylalkohol und 35 Mol Äthylenoxid. |
| 10 | Umsetzungsprodukt aus technischem Hydroabietylalkohol (ein Gemisch aus ca. 45% Tetrahydroabietylalkohol, 40% Dihydroabiethylalkohol und 15% Dehydroabietylalkohol) veräthert mit 100 Mol Äthylenoxid. |
| 11 | Umsetzungsprodukt aus Oleylalkohol mit 80 Mol Äthylenoxid. |
| 12 | Polyvinylpyrrolidon. |
| 13 | Natriumsalz des Kondensationsproduktes von Naphthalin-Sulfonsäure mit Formaldehyd der Formel 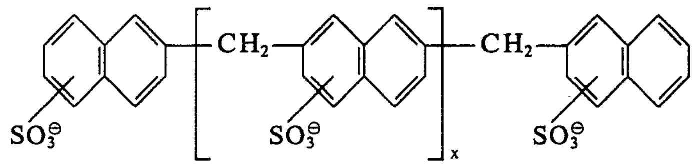 x = 0 bis 7 |
| 14 | Polymerisationsprodukt der Acrylsäure bzw. Methacrylsäure der Formel 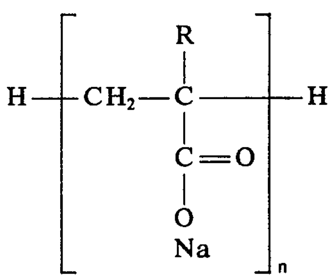 R = H oder $CH_3$ n = ca. 10 bis 100 |
| 15 | Acetylenisches nicht-ionisches Tensid der Formel 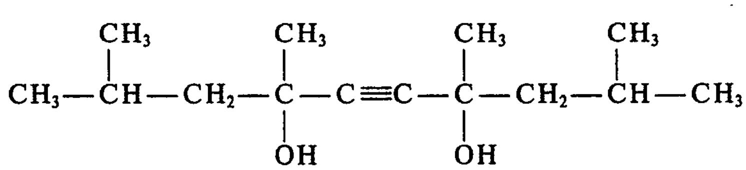 |

Beispiel 16

Der Filterkuchen des Farbstoffgemischs der 1:2 Co-Komplexe der Formeln

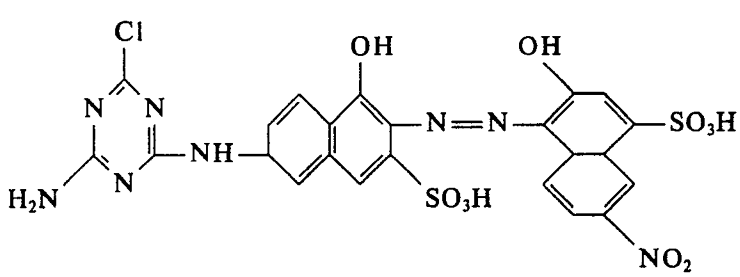

33%

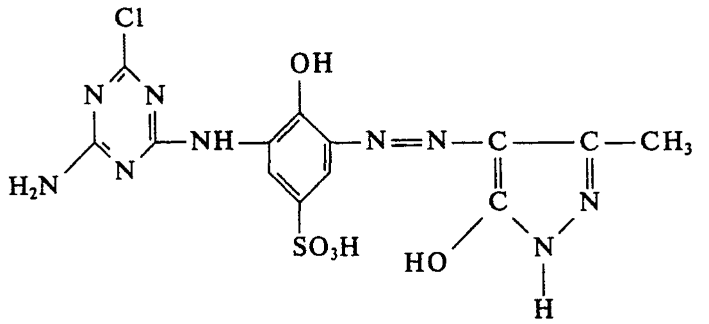

67%

wird in eine wäßrige Zubereitung von ca. 10% Trockengehalt gebracht und in einer Anlage für Reverse-Osmose wie im Beispiel 1 beschrieben aufkonzentriert und entsalzt. Die resultierende dickflüssige Suspension von ca. 15,7% Trockengehalt wird unter starkem Rühren mit ca. 25,3% Natriumsulfat, 16,5% Ligninsulfat, 11,4% Kondensationsprodukt aus Ölsäure mit 20 Mol Äthylenoxid und 5,1% eines Gemisches aus Paraffinöl und nichtionogener Emulgator, bezogen auf den trockenen Rohfarbstoff, versetzt. Der pH-Wert der Suspension wird mit einer 10%igen Natriumhydroxidlösung auf 6,0 bis 7,5 eingestellt, und anschließend mehrere Stunden durch starkes Rühren homogenisiert. Diese Suspension wird nun in eine Wirbelschicht aus Produktpulver gleicher Zusammensetzung wie der Trockenanteil der Suspension unter folgenden Bedingungen eingesprüht:

Zusammensetzung der Zubereitung:

| | |
|---|---|
| 15,8% | Rohfarbstoff |
| 4% | Natriumsulfat |
| 2,6% | Ligninsulfonat |
| 1,8% | Kondensationsprodukt aus Ölsäure und 20 Mol Äthylenoxid |
| 0,8% | Paraffinöl + nichtionogener Emulgator |
| 75% | Wasser |

| | |
|---|---|
| Lufteintrittstemperatur: | 150°C ± 5°C |
| Ablufttemperatur: | 65°C |
| Wirbelbett-Temperaturdifferenz $\Delta T$: | 10°C ± 2°C |
| Wirbelbett-Druckdifferenz $\Delta p$: | 882,6 Pa ± 49 Pa (90 mm WS ± 5 mm) |
| Strömungsgeschwindigkeit: | 0,5–3 m/sec. |
| Als Wirbelbett vorgelegte Menge an pulverförmiger Farbstoffzubereitung: | ca. 100 kg/m$^2$. |

Die in das Wirbelbett eingedüste Menge an wäßriger Farbstoffzubereitung beträgt ca. 650 Liter/h (Leistung).

Noch vorhandener Feinanteil bzw. während des Verlaufs des Verfahrens entstehendes Feinpulver wird im nachgeschalteten Sichter abgeschieden und zur Nachagglomerierung rückgeführt.

Man erhält ein staubarmes, rieselfähiges und formstabiles Farbstoffgranulat mit hohem Schüttgewicht sowie guter Benetzbarkeit und Löslichkeit sogar in kaltem Wasser der Zusammensetzung:

| | |
|---|---|
| 60% | Rohfarbstoff, praktisch salzfrei |
| 15% | Natriumsulfat |
| 10% | Ligninsulfonat |
| 7% | Kondensationsprodukt aus Ölsäure und 20 Mol Äthylenoxid |
| 3% | Paraffinöl + nichtionogenes Emulgator |
| 5% | Restfeuchte |

Dieses Granulat zeigt eine deutlich bessere Löslichkeit in kaltem Wasser sowie bessere Benetzbarkeit als das ohne Reverse-Osmose erhaltene Produkt mit denselben Zusätzen.

## Beispiel 17 bis 28

Verwendet man anstelle der in den vorstehenden Beispielen verwendeten Farbstoffe die in den folgenden Tabellen A bis C angegebenen Metallkomplexfarbstoffe, bei gleicher Arbeitsweise, so erhält man Granulate ähnlicher Zusammensetzung, die ähnliche Eigenschaften aufweisen.

In der Tabelle A sind 1:2-Mischkomplexe aufgeführt, die je 1 Molekül eines Farbstoffes der Kolonne III und der Kolonne IV an 1 Metallatom der Kolonne II komplex gebunden enthalten.

Tabelle A

| I<br>Beispiel Nr. | II<br>Metall | III<br>Farbstoff | IV<br>Farbstoff | V<br>Farbton |
|---|---|---|---|---|
| 17 | Cr | 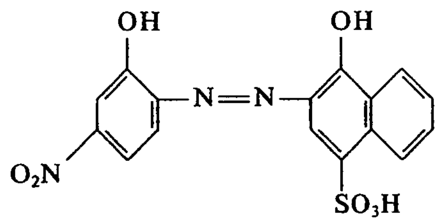 | 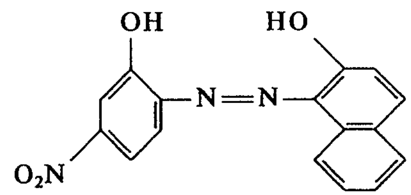 | Marineblau |
| 18 | Fe | 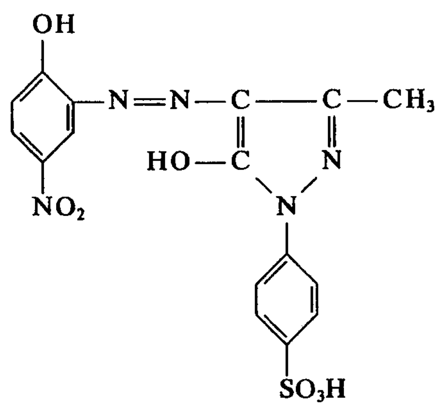 | 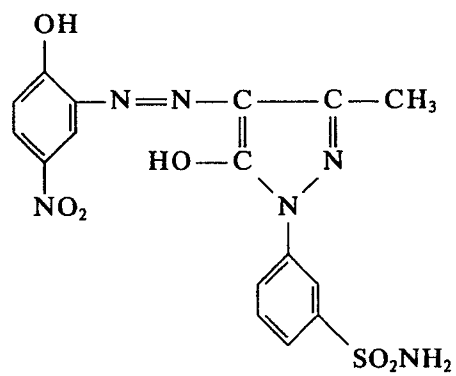 | Braun |
| 19 | Cr | 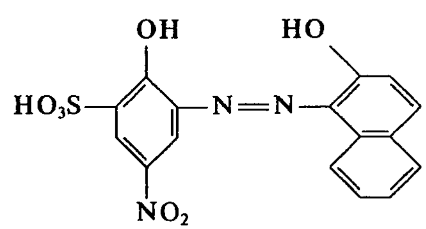 | 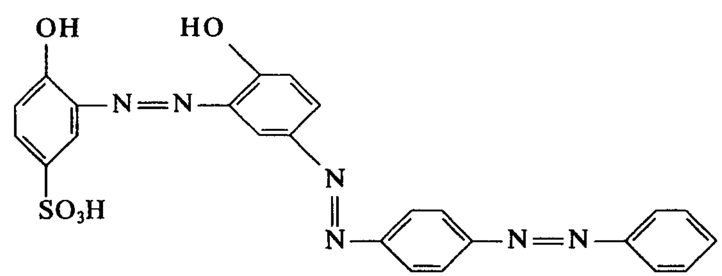 | Braun |

Fortsetzung

| I | II | III | IV | V |
|---|---|---|---|---|
| Beispiel Nr. | Metall | Farbstoff | Farbstoff | Farbton |
| 20 | Cr | 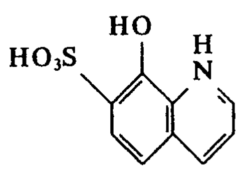 | 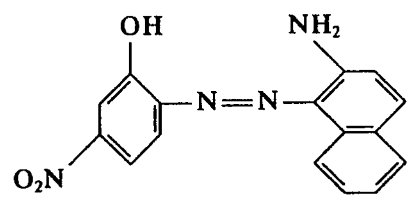 | Grün |

In der Tabelle B sind 1:1-Komplexe aufgeführt, die 1 Molekül des Farbstoffes an 1 Metallatom komplex gebunden, enthalten.

Tabelle B

| I<br>Beispiel Nr. | II<br>Metall | III<br>Farbstoff | IV<br>Farbton |
|---|---|---|---|
| 21 | Fe | 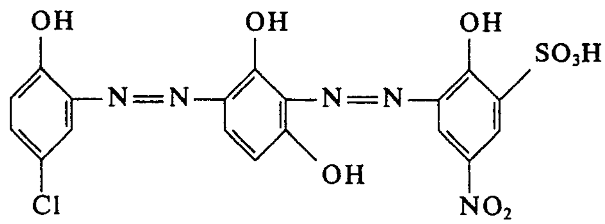 | Braun |
| 22 | Cr | 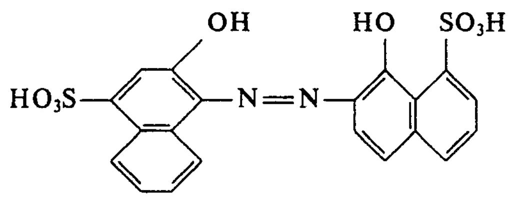 | Blau |
| 23 | Cr | 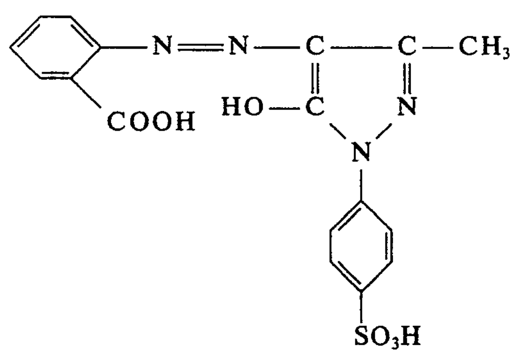 | Gelb |

Weitere 1:1-Metallkomplexfarbstoffe sind in der folgenden Tabelle C aufgeführt.

Tabelle C

| I<br>Beispiel Nr. | II<br>Farbstoff | III<br>Farbton |
|---|---|---|
| 24 | 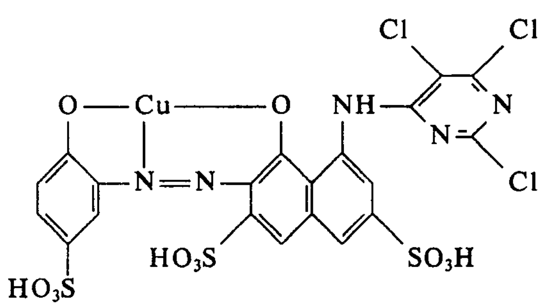 | Violett |

Fortsetzung

| I<br>Beispiel Nr. | II<br>Farbstoff | III<br>Farbton |
|---|---|---|
| 25 | 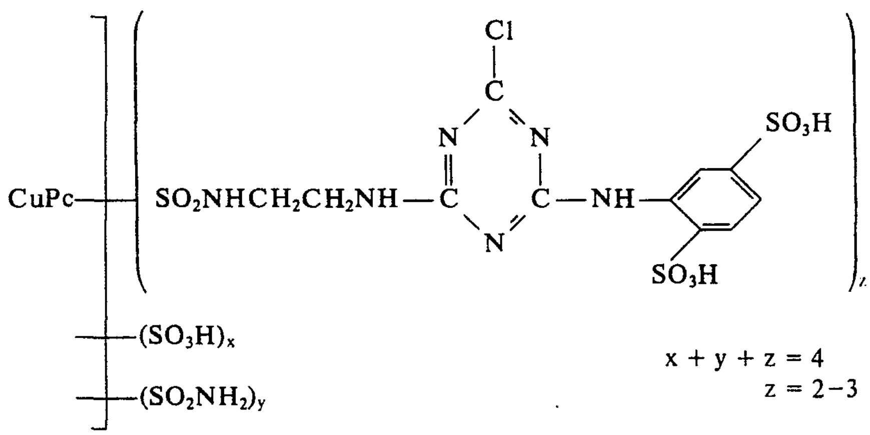<br>x + y + z = 4<br>z = 2−3 | Türkis |
| 26 | 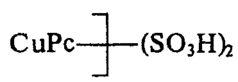 | Türkis |
| 27 | 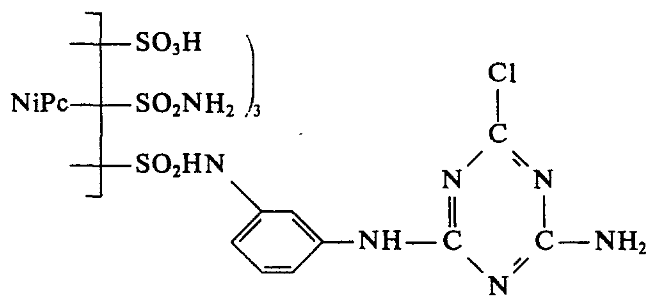 | Türkis |
| 28 | 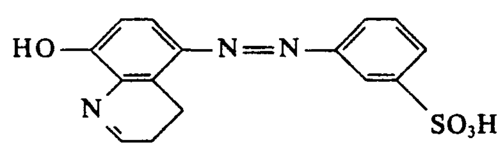 1:2-Co-Komplex | Braun |

### Beispiel 29

360 g feuchter Farbstoffpreßkuchen, der 120 g Farbstoff der Formel enthält:

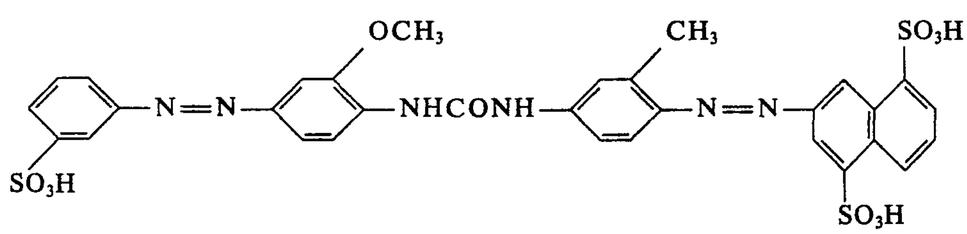

werden in 1500 ml Wasser angeschlämmt und die Farbstoffsuspension, enthaltend ca. 15% Natriumchlorid, bei Zimmertemperatur kontinuierlich wie im Beispiel 1 angegeben aufkonzentriert und entsalzt. Nach Entfernung ohne Farbstoffverlust von ca. 94% der theoretisch erfaßbaren Menge an Natriumchlorid (gemessen am Salzgehalt des Permeates) aus der ursprünglichen Suspension wird die so erhaltene Farbstofflösung wie in den vorhergehenden Beispielen beschrieben zur Herstellung von Granulaten weiterverarbeitet.

Ersetzt man im obigen Beispiel den Farbstoff des Preßkuchens durch entsprechende Mengen der in der folgenden Tabelle D, Kolonne II, angegebenen substantiven Farbstoffe und verfährt im übrigen, wie im Beispiel 29 angegeben, so erhält man ebenfalls Farbstoffgranulate mit ähnlichen Eigenschaften, die Cellulosefasern in den in der letzten Kolonne angegebenen Farbtönen färben.

Tabelle D

| I<br>Bei-spiel Nr. | II<br>Farbstoff | III<br>Farbton |
|---|---|---|
| 30 | 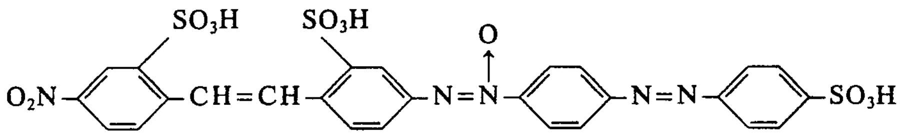 | Orange |
| 31 | 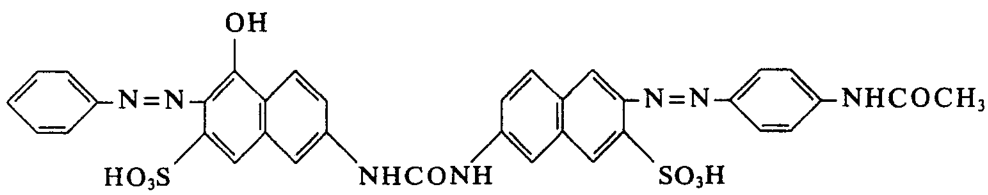 | Scharlach |
| 32 | 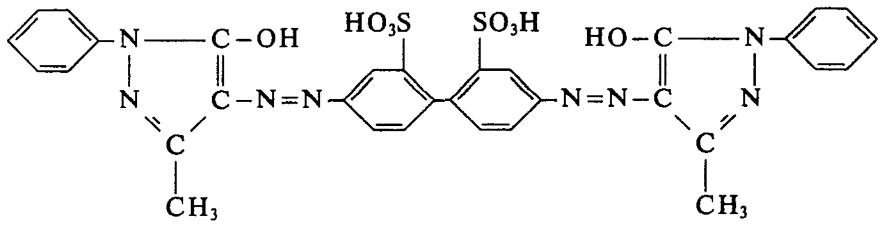 | Gelb |
| 33 | 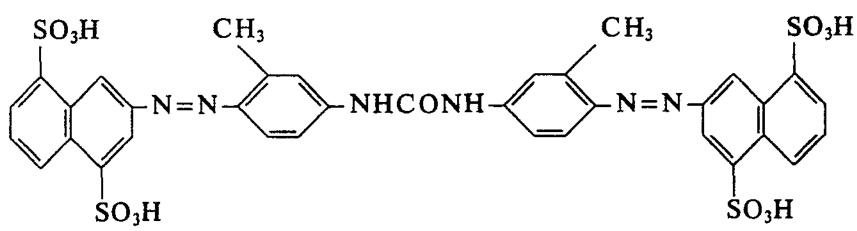 | Gelb |
| 34 | Selbst-Kondensationsprodukt von 5-Nitro-o-toluolsulfonsäure (C. I. 40 000) | Gelb |
| 35 | 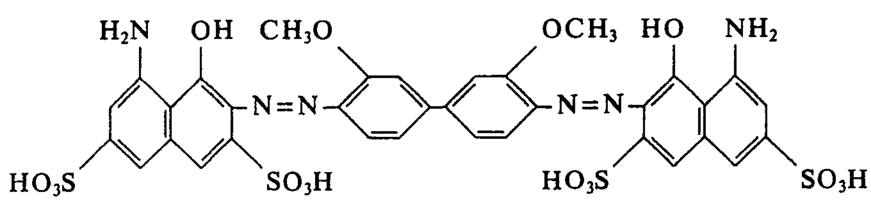 | Blau |
| 36 | 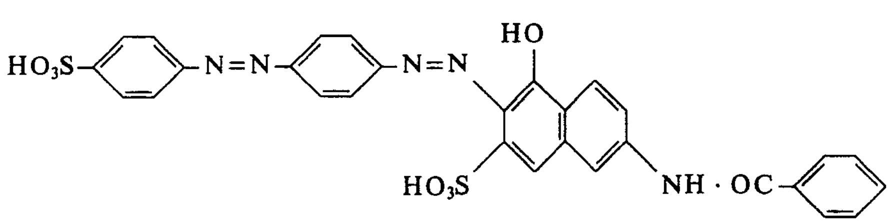 | Rot |

Fortsetzung

| I Beispiel Nr. | II Farbstoff | III Farbton |
| --- | --- | --- |
| 37 | 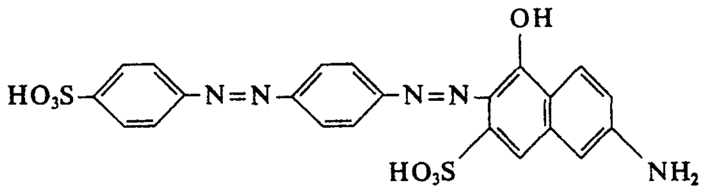 | Rot |
| 38 | 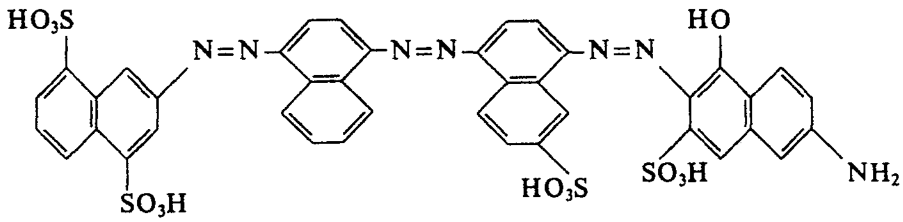 | Blau |
| 39 | 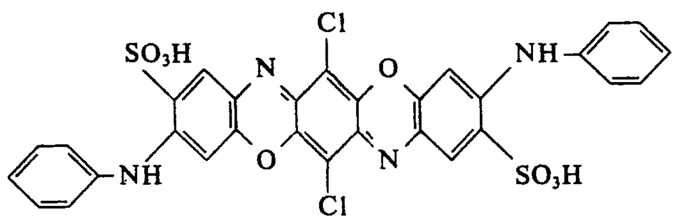 | Blau |
| 40 | 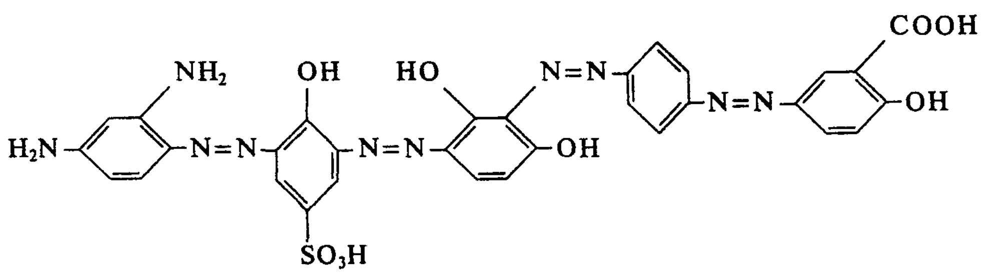 | Braun |

Beispiele 41 bis 49

Verfährt man gemäß der Arbeitsweise der vorstehenden Beispiele, verwendet jedoch die in den folgenden Tabellen E und F genannten Farbstoffe unter ähnlichen Arbeitsbedingungen, so erhält man Granulate, die ähnliche Eigenschaften aufweisen.

In der Tabelle E sind saure Farbstoffe aufgeführt, welche synthetisches Polyamidfasermaterial oder Wolle in den in der letzten Kolonne angegebenen Farbtönen färben.

Tabelle E

| I Beispiel Nr. | II Farbstoff | III Farbton |
|---|---|---|
| 41 | 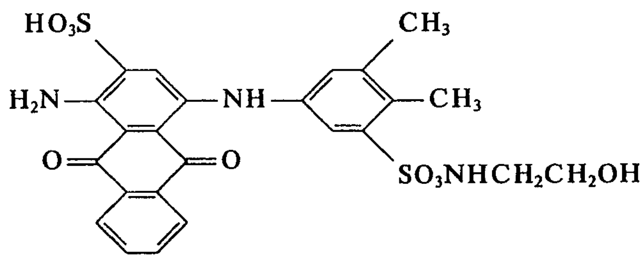 | Blau |
| 42 | 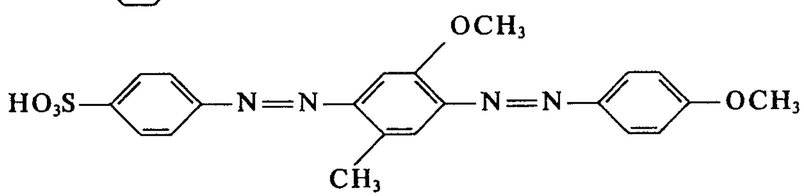 | Orange |
| 43 | 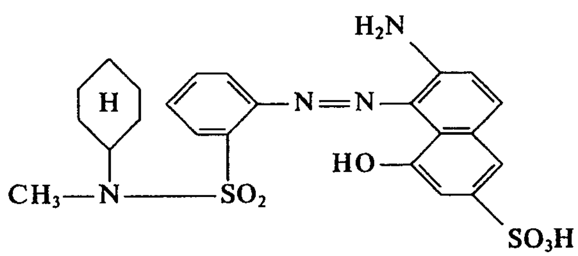 | Rot |
| 44 | 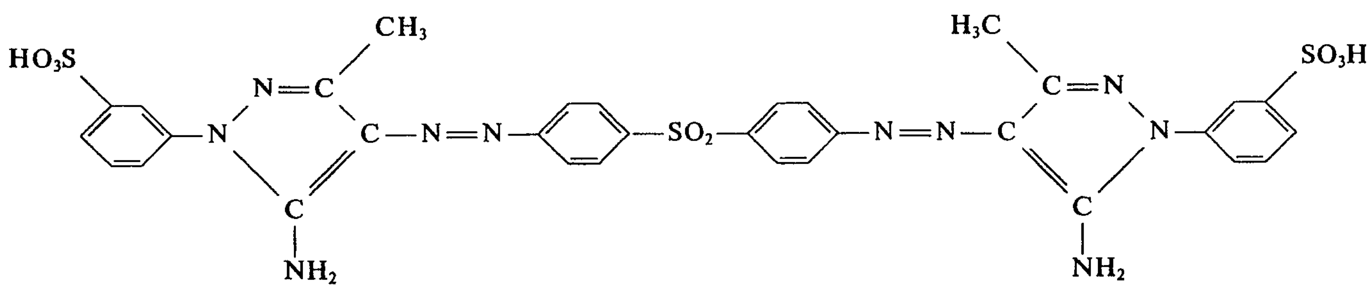 | Gelb |

In der Tabelle F sind basische Farbstoffe aufgeführt, welche Fasermaterial aus Polyacrylnitril in den in der letzten Kolonne angegebenen Farbtönen färben.

Tabelle F

| I<br>Beispiel Nr. | II<br>Farbstoff | | III<br>Farbton |
|---|---|---|---|
| 45 | 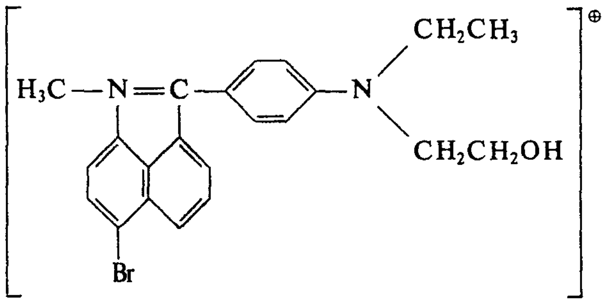 | $Cl^{\ominus}$ | Blau |
| 46 | 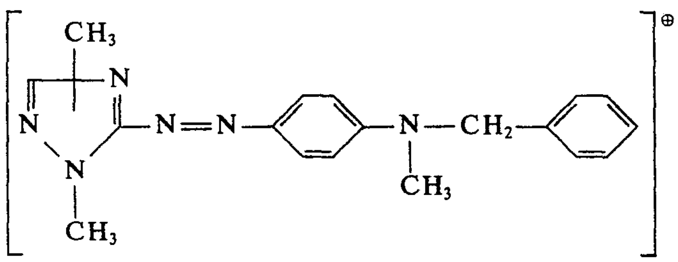 | $Cl^{\ominus}$ | Rot |
| 47 | 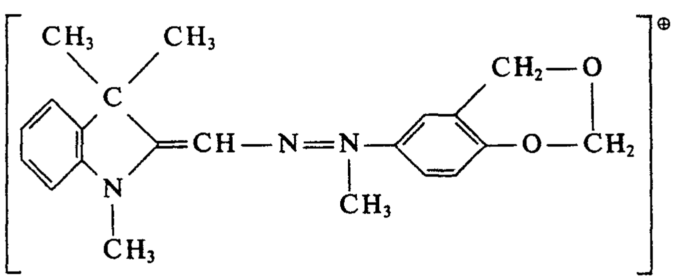 | $CH_3SO_4^{\ominus}$ | Gelb |
| 48 | 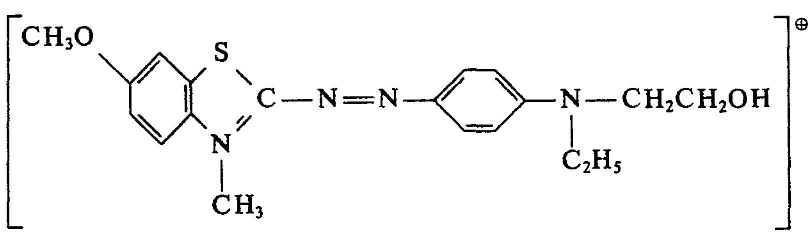 | $\frac{1}{2}(SO_4)^{\ominus}$ | Blau |
| 49 | 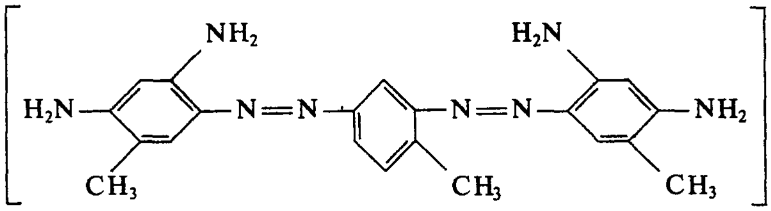 | HCl | Braun |

**Patentansprüche**

1. Verfahren zur Herstellung von Farbstoffgranulaten, dadurch gekennzeichnet, daß man eine wäßrige Lösung bzw. Suspension mindestens eines wasserlöslichen Rohfarbstoffes zur Abtrennung von Synthesenebenprodukten mit Molekulargewichten unter 500 und teilweisen Abtrennung von Wasser über eine halbdurchlässige asymmetrische, ionische Gruppen enthaltende Membran führt, deren Poren einen Durchmesser von 1 bis 500 Å aufweisen, und anschließend die erhaltene, aufkonzentrierte wäßrige Zubereitung in einem Granulierapparat trocknet, und als weitere Zusatzmittel vor und/oder nach dem Durchgang durch die Membran oberflächenaktive Substanzen, Bindemittel, Entstäubungsmittel, Löslichkeitsverbesserer und/oder Coupagemittel zugibt, wobei diese nur dann vorher zugegeben werden, wenn sie nicht durch die Membran abgetrennt werden.

2. Verfahren nach Anspruch 1, dadurch gekennzeichnet, daß die Membran aus einem Celluloseacetat-Grundgerüst besteht, das durch Umsetzung von nur teilweise acetyliertem Celluloseacetat mit einem polyfunktionellen Polymer modifiziert wurde, welches ionische Gruppen enthält und über ein Brückenglied mit dem Celluloseacetat-Grundgerüst verbunden ist.

3. Verfahren nach Anspruch 1, dadurch gekennzeichnet, daß die Membran aus einem Grundgerüst besteht, das Polyacrylnitril oder ein Polymerisat aus Acrylnitril und anderen äthylenisch ungesättigten Monomeren enthält, welches durch Umsetzung mit Hydroxylamin und anschließend mit einer polyfunktionellen Verbindung modifiziert wurde, welche ionische Gruppen enthält und gegebenenfalls über ein Brückenglied mit dem Grundgerüst verbunden ist.

4. Verfahren nach Anspruch 2 oder 3, dadurch gekennzeichnet, daß das Brückenglied der Membran von einer organischen Verbindung abgeleitet ist, die mindestens 2 funktionelle Gruppen aufweist.

5. Verfahren nach Anspruch 4, dadurch gekennzeichnet, daß das polyfunktionelle Polymer der Membran aliphatische oder aromatische Aminogruppen, Hydroxyl-, Thiol-, Isocyanat- und/oder Thioisocyanatgruppen aufweist.

6. Verfahren nach Anspruch 5, dadurch gekennzeichnet, daß sich das polyfunktionelle Polymer von Polyehtylenimin, Polyvinylalkohol, Cellulosederivaten oder Polyvinylanilin ableitet.

7. Verfahren nach Anspruch 2 oder 3, dadurch gekennzeichnet, daß die Membran als ionische Gruppen Sulfonsäure-, Carbonsäure- oder Ammoniumgruppen enthält.

8. Verfahren nach Anspruch 2 oder 3, dadurch gekennzeichnet, daß die Membran als Reste mit ionogenen Gruppen Reste eines wasserlöslichen Reaktivfarbstoffes enthält.

9. Verfahren nach Anspruch 3, dadurch gekennzeichnet, daß der Anteil der Acrylnitrileinheiten im Grundgerüst der Membran mindestens 5 und vorzugsweise mindestens 20% beträgt.

10. Verfahren nach Anspruch 9, dadurch gekennzeichnet, daß das Grundgerüst der Membran Copolymere von Acrylnitril und Vinylacetat, Vinyläthern, Vinylpyridin, Vinylchlorid, Styrol, Butadien, (Meth)-acrylsäure, Maleinsäureanhydrid, 2-Aminomethylmethacrylat oder Allylverbindungen oder Ter- oder Tetrapolymeren auf Acrylnitrilbasis enthält.

11. Verfahren nach Anspruch 1, dadurch gekennzeichnet, daß man die aufkonzentrierte wäßrige Zubereitung in einem Zerstäubungstrockner trocknet.

12. Verfahren nach Anspruch 1, dadurch gekennzeichnet, daß man die aufkonzentrierte wäßrige Zubereitung in einer Wirbelschichtanlage trocknet.

13. Verfahren nach Anspruch 1, dadurch gekennzeichnet, daß man als oberflächenaktive Substanz ein anionisches und/oder nicht-ionogenes Tensid verwendet.

14. Verfahren nach Anspruch 13, dadurch gekennzeichnet, daß man als anionisches Tensid ein Kondensationsprodukt auf der Basis von Phenol-, Kresol- oder Naphthol- bzw. Naphthalinsulfonsäure und Formaldehyd, oder ein Ligninsulfonat (Sulfit-Celluloseablauge) oder ein Oxyligninsulfonat verwendet.

15. Verfahren nach Anspruch 14, dadurch gekennzeichnet, daß man als anionisches Tensid ein Kondensationsprodukt auf der Basis von Naphthalinsulfonsäure und Formaldehyd verwendet.

16. Verfahren nach Anspruch 15, dadurch gekennzeichnet, daß man als anionisches Tensid das Natriumsalz des Kondensationsproduktes von Naphthalinsulfonsäure mit Formaldehyd der Formel

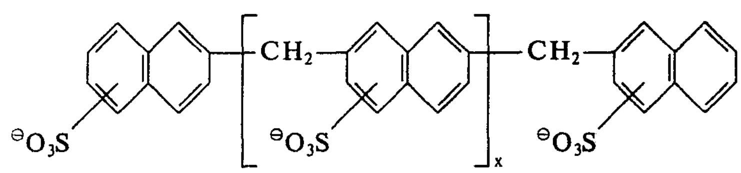

x = 0 bis 7

verwendet.

17. Verfahren nach Anspruch 13, dadurch gekennzeichnet, daß man als anionisches Tensid das Polymerisationsprodukt der Acrylsäure bzw. Methacrylsäure der Formel

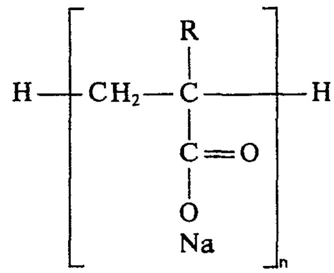

worin R H oder $CH_3$ und n ca. 10 bis 100 bedeuten, verwendet.

18. Verfahren nach Anspruch 13, dadurch gekennzeichnet, daß man als nichtionogenes Tensid ein Kondensationsprodukt aus einer 8 bis 22 Kohlenstoffatome aufweisenden Fettsäure und 10 bis 30 Mol Äthylenoxid, vorzugsweise aus Ölsäure und 20 Mol Äthylenoxid, verwendet.

19. Verfahren nach Anspruch 13, dadurch gekennzeichnet, daß man als nichtionogenes Tensid einen Fettalkoholpolyglykoläther aus einem 8 bis 22 Kohlenstoffatome aufweisenden Kohlenwasserstoffrest und 20 bis 100 Mol Äthylenoxid verwendet.

20. Verfahren nach Anspruch 19, dadurch gekennzeichnet, daß man als nichtionogenes Tensid einen Fettalkoholpolyglykoläther aus Oleylalkohol und 80 Mol Äthylenoxid oder aus Stearylalkohol und 35 Mol Äthylenoxid verwendet.

21. Verfahren nach Anspruch 13, dadurch gekennzeichnet, daß man als nichtionogenes Tensid Hydroabietylalkohol veräthert mit 25 bis 100 Mol, vorzugsweise 100 Mol Äthylenoxid verwendet.

22. Verfahren nach Anspruch 13, dadurch gekennzeichnet, daß man als nichtionogenes Tensid eine Verbindung der Formel

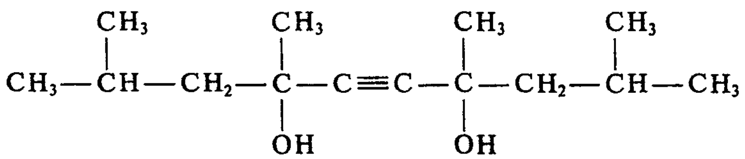

verwendet.

23. Verfahren nach Anspruch 1, dadurch gekennzeichnet, daß man als Bindemittel Polyvinylpyrrolidon verwendet.

24. Verfahren nach Anspruch 1, dadurch gekennzeichnet, daß man als Bindemittel Dextrin verwendet.

25. Verfahren nach Anspruch 1, dadurch gekennzeichnet, daß man als Entstäubungsmittel ein Gemisch aus Mineralöl bzw. Mineralölsulfonsäure und einem Emulgator oder aus Paraffinöl und einem nichtionischen Emulgator verwendet.

26. Verfahren nach Anspruch 1, dadurch gekennzeichnet, daß man als Löslichkeitsverbesserer Harnstoff verwendet.

27. Verfahren nach Anspruch 1, dadurch gekennzeichnet, daß man als Coupage Natriumsulfat, Natriumhydrogensulfat, Natriumcarbonat, Natriumhydrogencarbonat, Mono-, Di- oder Trinatriumphosphat, Natriumtripolyphosphat, Polyphosphate oder Lithiumchlorid und als organisches Salz Natriumacetat verwendet.

28. Verfahren nach Anspruch 1, dadurch gekennzeichnet, daß man 1 bis 30 Gewichtsprozent oberflächenaktiver Substanz, bezogen auf das Granulat, verwendet.

29. Verfahren nach Anspruch 1, dadurch gekennzeichnet, daß man die oberflächenaktive Substanz und die weiteren Zusätze in Gesamtmengen von 3 bis 50 Gewichtsprozent, bezogen auf das Granulat, verwendet.

30. Verfahren nach Anspruch 1, dadurch gekennzeichnet, daß man als wasserlöslichen Farbstoff einen anionischen Farbstoff verwendet.

31. Verfahren nach Anspruch 30, dadurch gekennzeichnet, daß man einen Metallkomplexfarbstoff verwendet.

32. Verfahren nach den Ansprüchen 30 und 31, dadurch gekennzeichnet, daß man einen Faserreaktivfarbstoff verwendet.

33. Verfahren nach Anspruch 32, dadurch gekennzeichnet, daß man einen Farbstoff der Formel I

$$D-Z_n \qquad (I)$$

verwendet, worin

D den Rest eines metallfreien oder metallhaltigen Azo-, Anthrachinon- oder Phthalocyaninfarbstoffes, der eine oder mehrere wasserlöslichmachende Gruppen aufweist,

Z eine Diazinyl- bzw. Triazinylgruppe, die mindestens ein abspaltbares Halogenatom aufweist und über

eine Aminogruppe an D gebunden ist, und
n 1 oder 2 bedeutet.

34. Verfahren nach Anspruch 32, dadurch gekennzeichnet, daß man einen Farbstoff der Formel II

$$D'-Z''_n \quad (II)$$

verwendet, worin
D' den Rest eines metallfreien oder metallhaltigen Azo-, Nitro-, Pyrazolon-, Thioxanthron-, Oxazin-, Anthrachinon-, Stilben- oder Phthalocyaninfarbstoffs, der eine oder mehrere wasserlöslichmachende Gruppen aufweist,
Z" eine Acylgruppe von einer Carbonsäure, die mindestens ein abspaltbares Halogenatom aufweist, und
n 1 oder 2 bedeutet.

35. Verfahren nach Anspruch 1, dadurch gekennzeichnet, daß man als wasserlöslichen Farbstoff einen basischen Farbstoff verwendet.

36. Die nach dem Verfahren gemäß den Ansprüchen 1 bis 35 erhaltenen Granulate von wasserlöslichen Farbstoffen.

37. Granulate, gemäß Anspruch 36, enthaltend 20 bis 95 Gewichtsprozent, vorzugsweise 65 bis 95 Gewichtsprozent, mindestens eines wasserlöslichen Farbstoffes, 1 bis 30 Gewichtsprozent einer oberflächenaktiven Substanz und/oder 1 bis 45 Gewichtsprozent weiterer Zusätze sowie Restfeuchte, wobei die Granulate total 3 bis 50 Gewichtsprozent der oberflächenaktiven Substanz und der weiteren Zusätze enthalten.

## Claims

1. A process for producing dye granulates, which process comprises passing an aqueous solution or suspension of at least one water-soluble crude dye, to effect separation of synthesis by-products having molecular weights of below 500 and partial separation of water, through a semipermeable, asymmetric membrane containing ionic groups, the pores of the membrane having a diameter of 1 to 500 Å, subsequently drying the resulting aqueous preparation, which has become more highly concentrated, in a granulating apparatus, and adding as further additives, before and/or after passage of the aqueous solution or suspension through the membrane, surface-active substances, binders, anti-dust agents, solubilisers and/or diluting agents, these additives being added beforehand only when they do not become separated by the membrane.

2. A process according to Claim 1, wherein the membrane consists of a cellulose acetate basic structure which has been modified by reaction of only partially acetylated cellulose acetate with a polyfunctional polymer which contains ionic groups and is bound by way of a bridge member to the cellulose acetate basic structure.

3. A process according to Claim 1, wherein the membrane consists of a basic structure which contains polyacrylonitrile of a copolymer from acrylonitrile and other ethylenically unsaturated monomers, and which has been modified by reaction with hydroxylamine and subsequently with a polyfunctional compound which contains ionic groups and is optionally bonded by way of a bridge member to the basic structure.

4. A process according to Claim 2 or 3, wherein the bridge member of the membrane is derived from an organic compound containing at least 2 functional groups.

5. A process according to Claim 4, wherein the polyfunctional polymer of the membrane contains aliphatic or aromatic amino groups, hydroxyl, thiol, isocyanate and/or thioisocyanate groups.

6. A process according to Claim 5, wherein the polyfunctional polymer is derived from polyethyleneimine, polyvinyl, alcohol, cellulose derivatives or polyvinylaniline.

7. A process according to Claim 2 or 3, wherein the ionic groups contained by the membrane are sulfonic acid groups, carboxylic acid groups or ammonium groups.

8. A process according to Claim 2 or 3, wherein the membrane contains radicals of a water-soluble reactive dye as radicals having ionic groups.

9. A process according to Claim 3, wherein the proportion of acrylonitrile units in the basic structure of the membrane is at least 5% and preferably at least 20%.

10. A process according to Claim 9, wherein the basic structure of the membrane contains copolymers of acrylonitrile and vinyl acetate, vinyl ethers, vinyl pyridine, vinyl chloride, styrene, butadiene, (meth)-acrylic acid, maleic anhydride, 2-aminomethylmethacrylate or allyl compounds, or ter- or tetrapolymers based on acrylonitrile.

11. A process according to Claim 1, wherein the further concentrated aqueous preparation is dried in a spray dryer.

12. A process according to Claim 1, wherein the further concentrated aqueous preparation is dried in a fluidisedbed apparatus.

13. A process according to Claim 1, wherein the surface-active substance used is an anionic and/or nonionic tenside.

14. A process according to Claim 13, wherein the anionic tenside used is a condensation product based on phenol-, cresol-, or naphthol- or naphthalenesulfonic acid and formaldehyde, or a ligninsulfonate (sulfite-cellulose waste liquor) or a hydroxyligninsulfonate.

15. A process according to Claim 14, wherein the anionic tenside used is a condensation product based on naphthalenesulfonic acid and formaldehyde.

16. A process according to Claim 15, wherein the anionic tenside used is the sodium salt of the condensation product of naphthalenesulfonic acid with formaldehyde of the formula

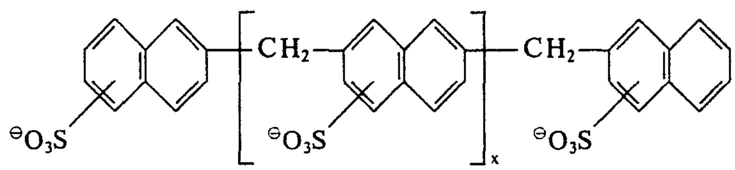

x = 0 to 7

17. A process according to Claim 13, wherein the anionic tenside used is the polymerisation product of acrylic acid or methacrylic acid of the formula

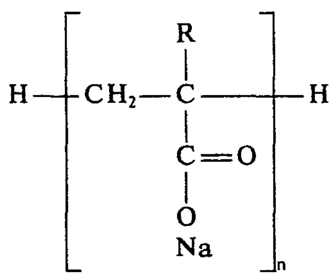

wherein R is H or $CH_3$ and n is about 10 to 100.

18. A process according to Claim 13, wherein the nonionic tenside used is a condensation product of a fatty acid, which contains 8 to 22 carbon atoms, and 10 to 30 mols of ethylene oxide, preferably of oleic acid and 20 mols of ethylene oxide.

19. A process according to Claim 13, wherein the nonionic tenside used is a fatty alcohol polyglycol ether from a hydrocarbon radical, which contains 8 to 22 carbon atoms, and 20 to 100 mols of ethylene oxide.

20. A process according to Claim 19, wherein the nonionic tenside used is a fatty alcohol polyglycol ether from oleyl alcohol and 80 mols of ethylene oxide, or from stearyl alcohol and 35 mols of ethylene oxide.

21. A process according to Claim 13, wherein the nonionic tenside used is hydroabietyl alcohol etherified with 25 to 100 mols, preferably 100 mols, of ethylene oxide.

22. A process according to Claim 13, wherein the nonionic tenside used is a compound of the formula

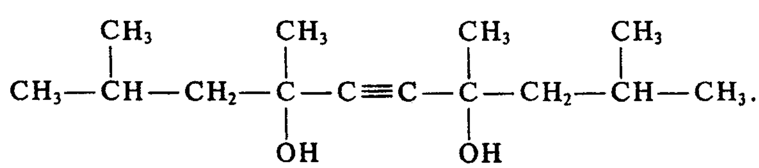

23. A process according to Claim 1, wherein the binding agent used is polyvinylpyrrolidone.

24. A process according to Claim 1, wherein the binding agent used is dextrin.

25. A process according to Claim 1, wherein the anti-dust agent used is a mixture of mineral oil or mineral oil sulfonic acid and an emulsifier, or of paraffin oil and a nonionic emulsifier.

26. A process according to Claim 1, wherein the solubiliser used is urea.

27. A process according to Claim 1, wherein the diluting agent used is sodium sulfate, sodium hydrogen sulfate, sodium carbonate, sodium hydrogen carbonate, mono-, di- or trisodium phosphate, sodium tripolyphosphate, polyphosphates or lithium chloride; and the organic salt used is sodium acetate.

28. A process according to Claim 1, wherein 1 to 30 per cent by weight of a surface-active substance, relative to the granulate, is used.

29. A process according to Claim 1, wherein the surface-active substance and the further additives are used in total ammounts of 3 to 50 per cent by weight, relative to the granulate.

30. A process according to Claim 1, wherein the watersoluble dye used is an anionic dye.

31. A process according to Claim 30, wherein a metalcomplex dye is used.
32. A process according to Claim 30 and 31, wherein a fibrereactive dye is used.
33. A process according to Claim 32, wherein there is used a dye of the formula I

$$D-Z_n \quad (I)$$

wherein
D is the radical of a metal-free or metal-containing azo, anthraquinone or phthalocyanine dye, each containing one or more water-solubilising groups,
Z is a diazinyl or triazinyl group each containing at least one halogen atom which can be split off and each being bonded by way of an amino group to D, and
n is 1 or 2.
34. A process according to Claim 32, wherein there is used a dye of the formula II

$$D'-Z''_n \quad (II)$$

wherein
D' is the radical of a metal-free or metal-containing azo, nitro, pyrazolone, thioxanthone, oxazine, anthraquinone, stilbene or phthalocyanine dye, each of which contains one or more water-solubilising groups,
Z" is an acyl group cf a carboxylic acid containing at least one halogen atom which can be split off, and
n is 1 or 2.
35. A process according to Claim 1, wherein the water-soluble dye used is a basic dye.
36. The granulates of water-soluble dyes obtained by the process according to Claims 1 to 35.
37. A granulate according to Claim 36, which granulate contains 20 to 95 per cent by weight, preferably 65 to 95 per cent by weight, of at least one water-soluble dye, 1 to 30 per cent by weight of a surface-active substance, and/or 1 to 45 per cent by weight of further additives, as well as residual moisture, the granulate containing a total of 3 to 50 per cent by weight of the surface-active substance and further additives.

**Revendications**

1. Procédé pour préparer des granulés de colorants, caractérisé en ce qu'on fait passer une solution ou une suspension aqueuse au moins d'un colorant brut soluble dans l'eau, pour assurer une séparation des sous-produits de synthèse ayant des masses moléculaires inférieures à 500 et une séparation partielle, de l'eau, à travers une membrane asymétrique, semiperméable, contenant des groupes ioniques, dont les pores présentent un diamètre de 1 à 500 Å, puis que l'on sèche la préparation aqueuse concentrée obtenue dans un appareil de granulation et que, en tant qu'additifs supplémentaires, on ajoute, avant et/ou après passage à travers la membrane, des substances tensioactives, des liants, des produits anti-poussière, des améliorants de solubilité et/ou des diluants, ces derniers n'étant ajoutés avant que s'ils ne sont pas séparés par la membrane.
2. Procédé selon la revendication 1, caractérisé en ce que la membrane est constituée d'une charpente fondamentale d'acétate de cellulose, laquelle a été modifiée par réaction d'acétate de cellulose seulement partiellement acétylé sur un polymère polyfonctionnel, lequel contient des groupes ioniques et est lié à la charpente fondamentale acétate de cellulose par un chaînon de pontage.
3. Procédé selon la revendication 1, caractérisé en ce que la membrane est constituée d'une charpente fondamentale qui contient du polyacrylonitrile ou un polymère de l'acrylonitrile et d'autres monomères à insaturation éthylénique, laquelle a été modifiée par réaction sur de l'hydroxylamine puis sur un composé polyfonctionell, qui contient des groupes ioniques et est éventuellement lié à la charpente fondamentale par un chaînon de pontage.
4. Procédé selon la revendication 2 ou 3, caractérisé en ce que le chaînon de pontage de la membrane dérive d'un composé organique contenant au moins deux groupes fonctionnels.
5. Procédé selon la revendication 4, caractérisé en ce que le polymère polyfonctionnel de la membrane possède des groupes amino aliphatiques ou aromatiques, des groupes hydroxyle, thiol, isocyanate et/ou thio-isocyanate.
6. Procédé selon la revendication 5, caractérisé en ce que le polymère polyfonctionnel dérive de polyéthylène-imine alcool polyvinylique, dérivés de la cellulose ou polyvinylaniline.
7. Procédé selon la revendication 2 ou 3, caractérisé en ce que la membrane contient en tant que groupes ioniques des groupes acide sulfonique, acide carboxylique ou ammonium.
8. Procédé selon la revendication 2 ou 3, caractérisé en ce que la membrane contient, en tant que résidus possédant des groupes ioniques, des résidus d'un colorant réactif soluble dans l'eau.
9. Procédé selon la revendication 3, caractérisé en ce que le pourcentage de motifs acrylonitrile dans la charpente fondamentale de la membrane est d'au moins 5% et de préférence d'au moins 20%.

10. Procédé selon la revendication 9, caractérisé en ce que la charpente fondamentale de la membrane contient des copolymères de l'acrylonitrile et de l'acétate de vinyle, d'éthers vinyliques, de vinylpyridine, de chlorure de vinyle, de styrène, de butadiène, d'acide (méth)-acrylique, d'anhydride maléique, de 2-aminométhylméthacrylate ou de composés allyliques ou des ter- ou tétrapolymères à base d'acrylonitrile.

11. Procédé selon la revendication 1, caractérisé en ce que la préparation aqueuse concentrée est séchée dans un sécheur par pulvérisation.

12. Procédé selon la revendication 1, caractérisé en ce que la préparation aqueuse concentrée est séchée dans une installation à lit fluidisé.

13. Procédé selon la revendication 1, caractérisé en ce qu'on utilise en tant que substance tensioactive un surfactif anionique et/ou non-ionique.

14. Procédé selon la revendication 13, caractérisé en ce qu'on utilise en tant que surfactif anionique un produit de condensation à base d'acide phénol-, crésol- ou naphtal- ou naphtalène-sulfonique et de formaldéhyde, ou un ligno—sulfonate (lessive résiduaire de pâte au bisulfite) ou un oxyligno-sulfonate.

15. Procédé selon la revendication 14, caractérisé en ce qu'on utilise en tant que surfactif anionique un produit de condensation à base d'acide naphtalène-sulfonique et de formaldéhyde.

16. Procédé selon la revendication 15, caractérisé en ce qu'on utilise en tant que surfactif anionique le sel de sodium du produit de condensation de l'acide naphtalène-sulfonique et du formaldéhyde, de formule

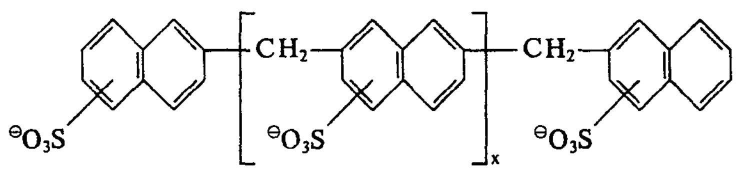

x = 0 à 7

17. Procédé selon la revendication 13, caractérisé en ce qu'on utilise en tant que surfactif anionique le produit de polymérisation de l'acide acrylique ou de l'acide méthacrylique de formule

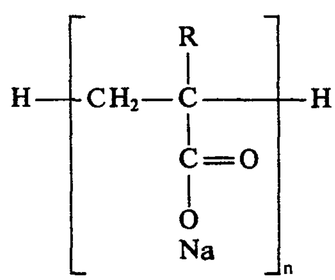

où R est H ou $CH_3$, et n vaut environ 10 à 100.

18. Procédé selon la revendication 13, caractérisé en ce qu'on utilise en tant que surfactif non-ionique un produit de condensation d'un acide gras ayant 8 à 22 atomes de carbone et 10 à 30 moles d'oxyde d'éthylène, de préférence de l'acide oléique et de 20 moles d'oxyde d'éthylène.

19. Procédé selon la revendication 13, caractérisé en ce qu'on utilise en tant que surfactif non-ionique un éther d'alcool gras et de polyglycol constitué d'un radical hydrocarboné à 8 à 22 atomes de carbone et 20 à 100 moles d'oxyde d'éthylène.

20. Procédé selon la revendication 19, caractérisé en ce qu'on utilise en tant que surfactif non-ionique un éther d'alcool gras et de polyglycol constitué d'alcool oléylique et de 80 moles d'oxyde d'éthylène ou d'alcool stéarylique et de 35 moles d'oxyde d'éthylène.

21. Procédé selon la revendication 13, caractérisé en ce qu'on utilise, en tant que surfactif non-ionique, de l'alcool hydroabiétylique éthérifié par 25 à 100 moles, de préférence 100 moles, d'oxyde d'éthylène.

22. Procédé selon la revendication 13, caractérisé en ce qu'on utilise en tant que surfactif non-ionique un composé de formule

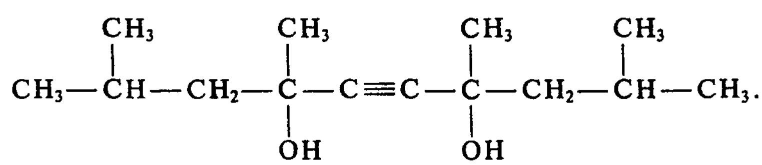

23. Procédé selon la revendication 1, caractérisé en ce qu'on utilise, en tant que liant, de la polyvinylpyrrolidone.

24. Procédé selon la revendication 1, caractérisé en ce qu'on utilise, en tant que liant, de la dextrine.

25. Procédé selon la revendication 1, caractérisé en ce qu'on utilise en tant que produit anti-poussière un mélange d'huile minérale ou d'acide (huile minérale)-sulfonique et d'un émulsionnant, ou d'huile de paraffine et d'un émulsionnant non-ionique.

26. Procédé selon la revendication 1, caractérisé en ce qu'on utilise, en tant qu'améliorant de solubilité, de l'urée.

27. Procédé selon la revendication 1, caractérisé en ce qu'on utilise, en tant que diluant, du sulfate de sodium, de l'hydrogénosulfate de sodium, du carbonate de sodium, du bicarbonate de sodium, du phosphate mono-, di- ou trisodique, du tripolyphosphate de sodium, des polyphosphates ou du chlorure de lithium et, en tant que sel organique, de l'acétate de sodium.

28. Procédé selon la revendication 1 caractérisé en ce qu'on utilise 1 à 30% en poids de substances tensioactives par rapport au granulé.

29. Procédé selon la revendication 1, caractérisé en ce qu'on utilise la substance tensioactive et les autres additifs en des quantités totales de 3 à 50% en poids sur la base du granulé.

30. Procédé selon la revendication 1, caractérisé en ce qu'on utilise en tant que colorant soluble dans l'eau un colorant anionique.

31. Procédé selon la revendication 30, caractérisé en ce qu'on utilise un colorant à complexe métallifère.

32. Procédé selon la revendication 30, ou 31, caractérisé en ce qu'on utilise un colorant réactif avec les fibres.

33. Procédé selon la revendication 32, caractérisé en ce qu'on utilise un colorant de formule I

$$D-Z_n \qquad (I)$$

où D est le résidu d'un colorant exempt de métaux ou contenant des métaux, azoïque, d'anthraquinone ou de phtalocyanine, qui possède un ou plusieurs groupes solubilisants dans l'eau; Z est un groupe diazinyle ou triazinyle contenant au moins un atome d'halogène séparable et lié à D par l'intermédiaire d'un groupe amino, et n vaut 1 ou 2.

34. Procédé selon la revendication 32, caractérisé en ce qu'on utilise un colorant de formule II

$$D'-Z''_n \qquad (II)$$

où d' est le résidue d'un colorant exempt de métaux ou contenant des métaux, azoïque, nitré, de pyrazolone, de thioxanthone, d'oxazine, anthraquinonique, de stilbène ou de phtalocyanine, qui contient un ou plusieurs groupes solubilisants dans l'eau; Z" est un groupe acyle d'un acide carboxylique, contenant au moins un atome d'halogène séparable, et n vaut 1 ou 2.

35. Procédé selon la revendication 1, caractérisé en ce qu'on utilise en tant que colorant soluble dans l'eau un colorant basique.

36. Les granulés de colorants solubles dans l'eau, obtenus par le procédé selon les revendications 1 à 35.

37. Granulés selon la revendication 36, contenant 20 à 95% en poids, de préférence 65 à 95% en poids, d'au moins un colorant soluble dans l'eau, 1 à 30% en poids d'une substance tensioactive et/ou 1 à 45% en poids d'autres additifs ainsi que d'humidité résiduelle, les granulés contenant en tout 3 à 50% en poids de la substance tensioactive et des autres additifs.